# EUROPEAN PATENT APPLICATION

(11) **EP 4 759 739 A1**
(43) Date of publication of application: **17.06.2026**
(21) Application number: 23948306.8
(22) Date of filing: 20.12.2023
(51) Int. Cl.: B65B 55/02, B65B 43/46, B65B 61/28, B65G 47/90, B65B 55/04

(54) **APPARATUS FOR MANUFACTURING PACKAGE PRODUCT, AND MANUFACTURING METHOD THEREFOR**

(30) Priority: 10.08.2023 CN 202311007479
(71) Applicant: SIG Services AG, 8212 Neuhausen am Rheinfall (CH)
(72) Inventor: WANG, Hanlin, Suzhou, Jiangsu 215126 (CN); ZÜRCHER, Remo, Suzhou, Jiangsu 215014 (CN)
(74) Representative: EP&C
(86) International application number: PCT/CN2023/140162
(87) International publication number: WO 2025/030745

(57) **Abstract**

Disclosed in the present invention are an apparatus for manufacturing a package product, and a manufacturing method therefor. The manufacturing apparatus comprises a sterile room, a supply device, a conveying device, a pretreatment device and a filling device, wherein the supply device and the conveying device are located outside the sterile room, and the pretreatment device and the filling device are located inside the sterile room. The manufacturing apparatus further comprises at least one transfer device, the transfer device is located outside the sterile room and between the supply device and a conveying assembly, and comprises a pushing assembly, wherein the pushing assembly is configured to push a package assembly to a target position, such that the package assembly is transferred to the conveying assembly at the target position. In the manufacturing apparatus, not only can a final package product be obtained from the package assembly by assembly line production including manufacturing, pretreatment and filling, but the sterile environment in the sterile room can also be effectively controlled, and therefore the quality of the package product is improved.

## Description

### CROSS-REFERENCE TO RELATED APPLICATION

The present application is based upon and claims priority to Chinese Patent Application No. 2023110074797, filed on August 10, 2023 and entitled "APPARATUS AND METHOD FOR MANUFACTURING PACKAGING PRODUCT", which is hereby incorporated by reference in its entirety and constitutes a part of the present application.

### TECHNICAL FIELD

Embodiments of the present disclosure relate to an apparatus and a method for manufacturing a packaging product.

### BACKGROUND

With the development of the packaging industry, equipment for manufacturing packaging products has also emerged accordingly. The equipment is typically an efficient and intelligent integrated production apparatus, and can be widely used in industries such as food, pharmaceuticals, and daily chemicals. Due to the emphasis people place on food safety, packaging for food items is receiving increasing attention from consumers. Good food packaging not only improves product quality but also extends the shelf life. Therefore, higher requirements are placed on apparatuses and methods for manufacturing packaging products.

### SUMMARY

According to embodiments of the present disclosure, there are provided an apparatus and a method for manufacturing a packaging product, which not only enable assembly-line production of packaging assemblies from manufacture to pretreatment and filling to obtain final packaging products, but also achieve effective control of the sterile environment inside the sterile chamber and improve the quality of the packaging products.

According to a first aspect of the present disclosure, there is provided an apparatus for manufacturing a packaging product, comprising a sterile chamber, a supply device, a conveying device, a pretreatment device and a filling device, the supply device and the conveying device being located outside the sterile chamber, and the pretreatment device and the filling device being located inside the sterile chamber, wherein the supply device is configured to provide a packaging assembly, the packaging assembly comprising a packaging body having an opening portion; the conveying device is configured to convey the packaging assembly from the supply device outside the sterile chamber into the sterile chamber and comprises a movable conveying assembly; the pretreatment device is configured to pretreat the packaging assembly and comprises a sterilization device; the filling device is configured to fill contents into the packaging body; wherein the apparatus for manufacturing further comprises: at least one transfer device located outside the sterile chamber and between the supply device and the conveying assembly, the transfer device comprising a pushing assembly configured to push the packaging assembly to a target position such that the packaging assembly is transferred to the conveying assembly from the target position.

In at least some embodiments, the packaging assembly is configured such that, after the packaging assembly enters the sterile chamber, the packaging body is located outside the sterile chamber and the opening portion is located inside the sterile chamber.

In at least some embodiments, the transfer device further comprises: a movable support plate, the pushing assembly being provided on the support plate; and a first driver used to drive the support plate to move the support plate and the pushing assembly in a second direction, wherein a first direction is parallel to the support plate and parallel to a conveying direction of the conveying assembly, and the second direction is parallel to the support plate and perpendicular to the first direction.

In at least some embodiments, the transfer device further comprises a first guide assembly, and the first guide assembly comprises: a guide rail provided on the support plate and parallel to the first direction; and a movable sliding block slidably connected to the guide rail, wherein the pushing assembly is connected to the sliding block and configured to move with the sliding block in the first direction.

In at least some embodiments, the transfer device further comprises: a top plate located above the support plate; and a second guide assembly comprising a guide groove provided on the top plate and a guide member provided on the pushing assembly, wherein the guide member is configured to move in the guide groove to move the pushing assembly in an extension direction of the guide groove.

In at least some embodiments, an extension direction of at least a part of the guide groove has components in the first direction and the second direction, such that the pushing assembly simultaneously moves in the first direction and the second direction.

In at least some embodiments, the pushing assembly comprises: a connecting member connected to the support plate and comprising a first end portion and a second end portion opposite to each other in an extension direction of the connecting member, the second end portion extending in a third direction perpendicular to the support plate; and a pushing member provided on the second end portion, wherein the opening portion comprises a tube body and a flange surrounding the tube body, and the pushing member is configured to abut against the flange to push the packaging assembly.

In at least some embodiments, the pushing assembly further comprises: a clamping jaw provided on the second end portion and spaced apart from the pushing member in the third direction, wherein the clamping jaw is configured to at least partially surround the tube body.

In at least some embodiments, the clamping jaw comprises a first finger portion and a second finger portion, the first finger portion and the second finger portion are opposite to each other in a diameter direction of the tube body, and the first finger portion and the second finger portion have unequal lengths.

In at least some embodiments, there are a plurality of pushing assemblies, and two clamping jaws of two adjacent pushing assemblies among the plurality of pushing assemblies have unequal vertical distances to the support plate.

In at least some embodiments, there are a plurality of packaging assemblies and a plurality of pushing assemblies, and the plurality of pushing assemblies are configured to push the plurality of packaging assemblies to a plurality of target positions batch by batch.

In at least some embodiments, two adjacent pushing assemblies among the plurality of pushing assemblies have a spacing in the first direction, and the spacing is set to be variable.

In at least some embodiments, the spacing gradually increases before the two adjacent pushing assemblies push two adjacent packaging assemblies to reach respective target positions thereof.

In at least some embodiments, the transfer device further comprises: a guide plate provided with a guide channel parallel to the conveying direction, the packaging assembly being guided into the guide channel, and the pushing assembly pushing the packaging assembly in the guide channel to the target position.

In at least some embodiments, the transfer device further comprises: a bottom plate, the guide plate being connected to the bottom plate; and a second driver used to drive the bottom plate, so as to move the bottom plate and the guide plate in a direction parallel to the guide plate.

In at least some embodiments, the transfer device further comprises: a blocking member configured to block the packaging assembly in the guide channel to position the packaging assembly in the guide channel.

In at least some embodiments, the transfer device further comprises: a top plate, wherein the blocking member is connected to the top plate and is located below the guide plate, and the guide plate is configured to be movable relative to the blocking member, so as to drive the packaging assembly in the guide channel to be released from positioning.

In at least some embodiments, the apparatus for manufacturing a packaging product comprises two transfer devices respectively provided on two opposite sides of the conveying assembly perpendicular to the conveying direction.

In at least some embodiments, the apparatus for manufacturing a packaging product further comprises: at least one buffer device located outside the sterile chamber and between the supply device and the transfer device to buffer a supply time interval of the packaging assembly.

In at least some embodiments, the buffer device comprises: a rotating component having a holding portion for holding the packaging assembly and configured to rotate the holding portion and the packaging assembly from a first position away from the transfer device to a second position close to the transfer device.

In at least some embodiments, the rotating component comprises a turntable, an outer edge of the turntable is provided with a notch, and the packaging assembly is configured to be hung in the notch such that the packaging assembly is in a suspended state.

In at least some embodiments, the apparatus for manufacturing a packaging product comprises two buffer devices respectively provided on two opposite sides of the conveying assembly perpendicular to the conveying direction.

In at least some embodiments, the pretreatment device further comprises a preheating device provided before the sterilization device in the conveying direction and a drying device provided after the sterilization device in the conveying direction.

In at least some embodiments, the preheating device comprises at least one preheating nozzle, the sterilization device comprises at least one sterilization nozzle, the drying device comprises at least one drying nozzle, and the opening portion is configured to, after entering the sterile chamber, be sequentially aligned with the preheating nozzle, the sterilization nozzle, and the drying nozzle.

In at least some embodiments, the apparatus for manufacturing a packaging product further comprises: a capping device located inside the sterile chamber, wherein the conveying assembly is further configured to convey the packaging assembly into the capping device after the packaging body is filled with the contents, and the capping device is configured to seal the packaging assembly with a cap.

In at least some embodiments, the apparatus for manufacturing a packaging product further comprises: at least one discharging device located outside the sterile chamber, wherein the conveying assembly is further configured to convey the packaging assembly into the discharging device after the packaging body is filled with the contents, and the discharging device is configured to remove the packaging assembly from the conveying assembly, the packaging assembly being with or without a cap.

In at least some embodiments, the discharging device comprises at least one first discharging assembly close to the sterile chamber and at least one second discharging assembly away from the sterile chamber, the first discharging assembly is configured to remove non-compliant packaging assemblies from the conveying assembly, and the second discharging assembly is configured to remove compliant packaging assemblies from the conveying assembly.

In at least some embodiments, the first discharging assembly comprises: a first discharging plate provided with a first discharging channel; and a first discharging pushing block configured to push the non-compliant packaging assemblies from the conveying assembly into the first discharging channel and to drop the non-compliant packaging assemblies when the non-compliant packaging assemblies are pushed to a discharging position on the first discharging channel.

In at least some embodiments, the first discharging assembly further comprises: a first discharging drive mechanism used to drive the first discharging pushing block, wherein there are a plurality of first discharging assemblies, and a plurality of first discharging pushing blocks of the plurality of first discharging assemblies are independently driven by respective first discharging drive mechanisms thereof.

In at least some embodiments, the second discharging assembly comprises: a second discharging plate provided with a second discharging channel; and a second discharging pushing block configured to push the compliant packaging assemblies from the conveying assembly into the second discharging channel and to drop the compliant packaging assemblies when the compliant packaging assemblies are pushed to a discharging position on the second discharging channel.

In at least some embodiments, the second discharging assembly further comprises: a second discharging drive mechanism used to drive the second discharging pushing block, wherein there are a plurality of second discharging assemblies, and a plurality of second discharging pushing blocks of the plurality of second discharging assemblies are driven by a same second discharging drive mechanism.

In at least some embodiments, the plurality of second discharging assemblies are configured to remove a plurality of compliant packaging assemblies, and the plurality of compliant packaging assemblies have unequal movement distances after entering respective second discharging channels thereof.

In at least some embodiments, the conveying assembly comprises a movable conveyor belt and a holding member provided on the conveyor belt, and the holding member is configured to hold the packaging assembly therein at the target position and to bring the packaging assembly from the target position into the sterile chamber.

In at least some embodiments, the holding member comprises a first jaw portion and a second jaw portion opposite to each other in an extension direction of the holding member, and the first jaw portion and the second jaw portion are respectively located on two opposite sides of the conveyor belt perpendicular to the conveying direction; and the conveyor belt comprises a first jaw portion group and a second jaw portion group, the first jaw portion group comprising a plurality of first jaw portions and the second jaw portion group comprising a plurality of second jaw portions.

In at least some embodiments, the apparatus for manufacturing comprises: a modular manufacturing assembly, wherein the modular manufacturing assembly is detachably provided on a side where at least one of the first jaw portion group and the second jaw portion group is located, and the modular manufacturing assembly comprises at least one of the transfer device, a buffer device and a discharging device located outside the sterile chamber.

In at least some embodiments, the supply device comprises a manufacturing machine for manufacturing the packaging body and an attaching machine for attaching the opening portion to the packaging body.

In at least some embodiments, the supply device comprises a material feeding machine for providing a prefabricated packaging assembly, the apparatus for manufacturing further comprises a transport device located between the material feeding machine and the transfer device, and the transport device comprises: a plate body provided with a transport channel, the packaging assembly being located in the transport channel; and a propelling assembly configured to push the packaging assembly to enter the transfer device in an extension direction of the transport channel.

According to a second aspect of the present disclosure, there is provided a method for manufacturing a packaging product, comprising: providing a packaging assembly outside a sterile chamber, the packaging assembly comprising a packaging body having an opening portion; transferring the packaging assembly to a target position outside the sterile chamber; conveying the packaging assembly from the target position into the sterile chamber; pretreating the packaging assembly inside the sterile chamber, the pretreating comprising sterilization; and filling contents into the packaging body inside the sterile chamber.

In at least some embodiments, there are a plurality of packaging assemblies, and the method for manufacturing comprises: moving the plurality of packaging assemblies to a plurality of target positions outside the sterile chamber; and conveying the plurality of packaging assemblies from the plurality of target positions into the sterile chamber.

In at least some embodiments, the plurality of packaging assemblies are sequentially arranged in a conveying direction; and moving the plurality of packaging assemblies to a plurality of target positions outside the sterile chamber comprises: moving the plurality of packaging assemblies in a first direction parallel to the conveying direction and a second direction perpendicular to the conveying direction, so as to cause the plurality of packaging assemblies to reach the plurality of target positions, respectively; and during the movement, a spacing between two adjacent packaging assemblies among the plurality of packaging assemblies in the first direction gradually increases.

In at least some embodiments, the method for manufacturing comprises: moving the plurality of packaging assemblies to the plurality of target positions batch by batch until all the packaging assemblies are conveyed into the sterile chamber.

In at least some embodiments, before moving the plurality of packaging assemblies to a plurality of target positions outside the sterile chamber, the method for manufacturing further comprises: guiding the plurality of packaging assemblies into a guide channel; blocking the plurality of packaging assemblies in the guide channel to position the plurality of packaging assemblies in the guide channel; and moving the guide channel to drive the plurality of packaging assemblies to be released from positioning.

In at least some embodiments, before moving the plurality of packaging assemblies to a plurality of target positions outside the sterile chamber, the method for manufacturing further comprises: buffering a supply time interval of the packaging assemblies.

In at least some embodiments, the pretreating further comprises preheating and drying; and before filling contents into the packaging body inside the sterile chamber, the method for manufacturing further comprises: sequentially performing preheating, sterilization and drying on the packaging body.

In at least some embodiments, after filling contents into the packaging body inside the sterile chamber, the method for manufacturing further comprises: sealing the packaging assembly with a cap inside the sterile chamber.

In at least some embodiments, after filling contents into the packaging body inside the sterile chamber, the method for manufacturing further comprises: conveying the packaging assembly to the outside of the sterile chamber; removing, outside the sterile chamber, non-compliant packaging assemblies; and removing, outside the sterile chamber, compliant packaging assemblies.

### BRIEF DESCRIPTION OF DRAWINGS

To describe the technical solutions in the embodiments of the present disclosure more clearly, the accompanying drawings of the embodiments will be briefly described below. Apparently, the accompanying drawings described below merely relate to some embodiments of the present disclosure, rather than limiting the present disclosure.
FIG. 1 is a schematic structural view of an apparatus for manufacturing a packaging product according to an embodiment of the present disclosure.
FIG. 2 is a schematic structural view of a packaging assembly according to an embodiment of the present disclosure.
FIG. 3 is a schematic structural view of a conveying device according to an embodiment of the present disclosure.
FIG. 4 is a schematic structural view of a holding member according to an embodiment of the present disclosure.
FIG. 5 is a schematic structural view of a buffer device and a transfer device according to an embodiment of the present disclosure.
FIG. 6A is a first schematic structural view of a transfer device according to an embodiment of the present disclosure.
FIG. 6B is a second schematic structural view of a transfer device according to an embodiment of the present disclosure.
FIG. 6C is a third schematic structural view of a transfer device according to an embodiment of the present disclosure.
FIG. 7 is a schematic structural view of a pushing assembly according to an embodiment of the present disclosure.
FIGS. 8A to 8F are plan views of a transfer device according to an embodiment of the present disclosure in respective different states.
FIG. 9 is a simplified schematic cross-sectional view of a transfer device according to an embodiment of the present disclosure.
FIG. 10A is a schematic view showing the position of a blocking member according to an embodiment of the present disclosure in the state shown in FIG. 8A.
FIG. 10B is a schematic view showing the position of the blocking member according to an embodiment of the present disclosure in the state shown in FIG. 8B.
FIG. 11 is a plan view of a buffer device according to an embodiment of the present disclosure.
FIG. 12 is a schematic structural view of a discharging device according to an embodiment of the present disclosure.
FIG. 13 is a schematic structural view of a first discharging assembly according to an embodiment of the present disclosure.
FIG. 14 is a schematic structural view of a second discharging assembly according to an embodiment of the present disclosure.
FIG. 15 is a bottom view of the second discharging assembly of FIG. 14.
FIG. 16 is a plan view of a plurality of second discharging channels according to an embodiment of the present disclosure.
FIG. 17 is a schematic flowchart of a method for manufacturing a packaging product according to an embodiment of the present disclosure.
FIG. 18 is a structural block diagram of a supply device according to an embodiment of the present disclosure.
FIG. 19 is a structural block diagram of a supply device according to another embodiment of the present disclosure.
FIG. 20A is a plan view of a transport device according to an embodiment of the present disclosure.
FIG. 20B is a schematic structural view of a transport device according to an embodiment of the present disclosure.

### DETAILED DESCRIPTION

To make the objectives, technical solutions, and advantages of the embodiments of the present disclosure clearer, the technical solutions in the embodiments of the present disclosure will be clearly and completely described below with reference to the accompanying drawings of the embodiments of the present disclosure. Apparently, the described embodiments are some, rather than all, of the embodiments of the present disclosure. All other embodiments obtained by a person of ordinary skill in the art based on the described embodiments of the present disclosure without inventive effort shall fall within the scope of protection of the present disclosure.

Unless otherwise defined, technical terms or scientific terms used herein shall have ordinary meanings as understood by a person of ordinary skill in the art of the present disclosure. The terms "first" and "second" and similar terms used in the description and claims of the patent application of the present disclosure do not denote any order, quantity, or importance, but are merely intended to distinguish between different constituents. The term "comprising", "including", or a similar term means that an element or object that occurs before "comprising" or "including" encompasses an element or an object or its equivalents listed after "comprising" or "including" without excluding other elements or objects. The term "connect", "link", or a similar term is not limited to physical or mechanical connections, but may include electrical connections, whether direct or indirect. "Up", "down", "left", "right", etc. are only used to indicate relative position relationship, and when the absolute position of the described object is changed, the relative position relationship may also be changed accordingly.

According to an embodiment of the present disclosure, there is provided an apparatus for manufacturing a packaging product, including a sterile chamber, a supply device, a conveying device, a pretreatment device and a filling device, the supply device and the conveying device being located outside the sterile chamber, and the pretreatment device and the filling device being located inside the sterile chamber. The supply device is configured to provide a packaging assembly, the packaging assembly including a packaging body having an opening portion; the conveying device is configured to convey the packaging assembly from the supply device outside the sterile chamber into the sterile chamber and includes a movable conveying assembly; the pretreatment device is configured to pretreat the packaging assembly and includes a sterilization device; and the filling device is configured to fill contents into the packaging body. The apparatus for manufacturing further includes at least one transfer device located outside the sterile chamber and between the supply device and the conveying assembly, the transfer device including a pushing assembly configured to push the packaging assembly to a target position such that the packaging assembly is transferred to the conveying assembly from the target position.

According to an embodiment of the present disclosure, there is further provided a method for manufacturing a packaging product, including: providing a packaging assembly outside a sterile chamber, the packaging assembly including a packaging body having an opening portion; transferring the packaging assembly to a target position outside the sterile chamber; conveying the packaging assembly from the target position into the sterile chamber; pretreating the packaging assembly inside the sterile chamber, the pretreating including sterilization; and filling contents into the packaging body inside the sterile chamber.

The apparatus and the method for manufacturing a packaging product provided according to the embodiments of the present disclosure described above not only enable assembly-line production of packaging assemblies from manufacture to pretreatment and filling to obtain final packaging products, but also achieve effective control of the sterile environment inside the sterile chamber and improve the quality of the packaging products.

The present disclosure will be described below through specific embodiments. To make the below description of the embodiments of the present disclosure clear and concise, detailed description of known functions and known components may be omitted. When any component in the embodiments of the present disclosure appears in one or more drawings, that component may be denoted by the same reference numeral in each drawing.

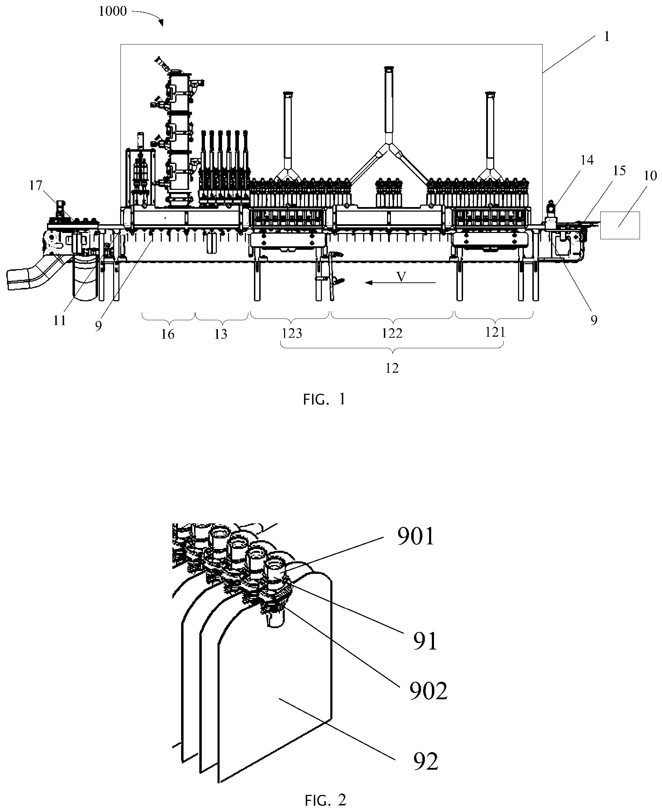

FIG. 1 is a schematic structural view of an apparatus for manufacturing a packaging product according to an embodiment of the present disclosure. For example, as shown in FIG. 1, an apparatus 1000 for manufacturing a packaging product provided in the embodiment of the present disclosure includes a sterile chamber 1, a supply device 10, a conveying device 11, a pretreatment device 12 and a filling device 13.

For example, the supply device 10 is configured to prepare a packaging assembly 9, the packaging assembly 9 including a packaging body having an opening portion.

In the embodiment of the present disclosure, the packaging body is, for example, a packaging container, and the packaging container may be in the shape of a bottle, a box, or a pouch, and the material thereof includes, but is not limited to, a thermoplastic material, such as polyolefin. The opening portion is used to provide a channel in communication with the packaging body. By means of this channel, the packaging body may be subjected to processes such as preheating, sterilization, drying, and filling with contents. For example, the opening portion may be a part of the packaging body, that is, the opening portion and the packaging body are of an integrated structure, or the opening portion may be an accessory attached to the packaging body. FIG. 2 is a schematic structural view of a packaging assembly according to an embodiment of the present disclosure. As shown in FIG. 2, the packaging assembly 9 includes a pouch 92 with a spout 91, wherein the spout 91 is attached to the top edge of the pouch 92. For illustrative purposes, the packaging assembly 9 shown in FIG. 2 will be taken as an example for description below. However, the packaging assembly is not specifically limited in the embodiments of the present disclosure.

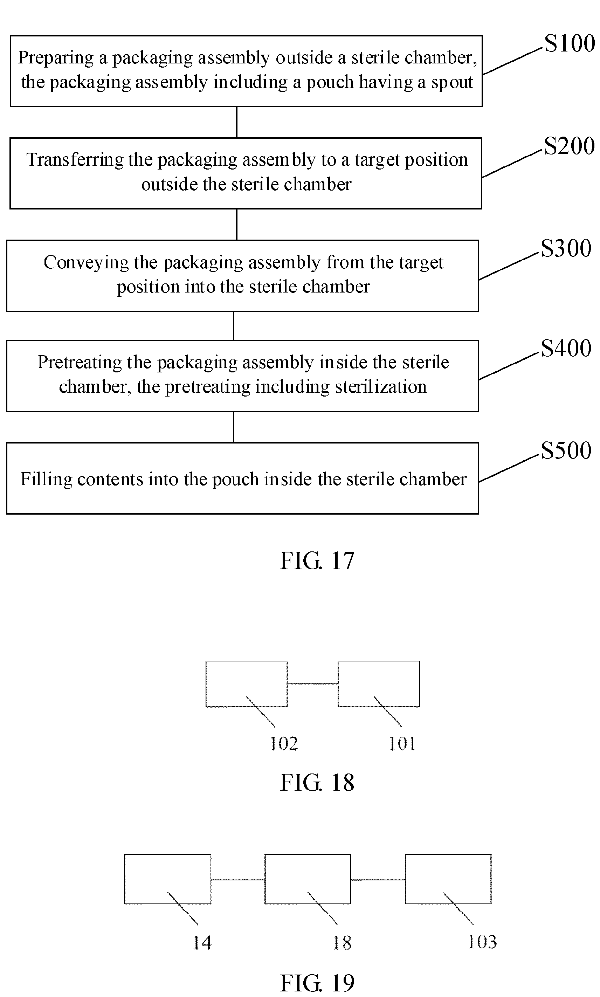

FIG. 18 is a structural block diagram of a supply device according to an embodiment of the present disclosure. In some embodiments, as shown in FIG. 18, the supply device 10 may include a manufacturing machine 101 for manufacturing the packaging body and an attaching machine 102 for attaching the opening portion to the packaging body. For example, the supply device 10 is configured to prepare the pouch 92 and attach the spout 91 to the top edge of the pouch 92. In some embodiments, the supply device 10 may include a pouch production machine (not shown) for manufacturing the pouch 92 and an accessory sealing machine for attaching the spout 91 to the pouch 92.

For example, the pouch production machine is configured to produce upright foldable pouches. The pouch production machine may include a film supply device adapted to receive one or more rolls of flexible heat-sealable film material and to unwind the rolls into film material. The pouch production machine may further include a folding device configured to fold the unfolded film material such that the film material is shaped into a first pouch wall and an opposing second pouch wall to define the interior of the pouch therebetween. The pouch production machine may further include a sealing device to seal the bottom and side edges of the first pouch wall and the second pouch wall.

For example, the accessory sealing machine is configured to attach an accessory in an unbonded edge region between opposing first and second pouch walls made of a heat-sealable film material (e.g., by means of heat sealing). The accessory is, for example, the spout 91. The spout 91 includes a tube body 901 and a flange 902 surrounding the tube body 901, the tube body 901 being used to form a filler passage for filling the contents into the pouch 92 via the tube body 901.

The above is an example of the supply device 10 preparing the packaging assembly 9, and it can be understood that the supply device 10 may also prepare the packaging assembly 9 in other ways, which is not limited in the embodiments of the present disclosure. In addition, the packaging assembly 9 may be, for example, directly commercially available instead of being prepared by the supply device 10.

FIG. 19 is a structural block diagram of a supply device according to another embodiment of the present disclosure. In some embodiments, as shown in FIG. 19, the supply device 10 includes a material feeding machine 103 for providing a prefabricated packaging assembly 9. The material feeding machine 103 is used to provide packaging assemblies 9 that are directly commercially available.

Optionally, the apparatus for manufacturing may further include a transport device 18 located between the material feeding machine 103 and the transfer device 14, and the transport device 18 may transport the packaging assembly 9 to the transfer device 14, for example, into a guide channel 28 of a guide plate 143. By providing the transport device 18 between the material feeding machine 103 and the transfer device 14, the buffer device 15 of FIG. 1 may be omitted, so that the distance between the material feeding machine 103 and the transfer device 14 can be further shortened.

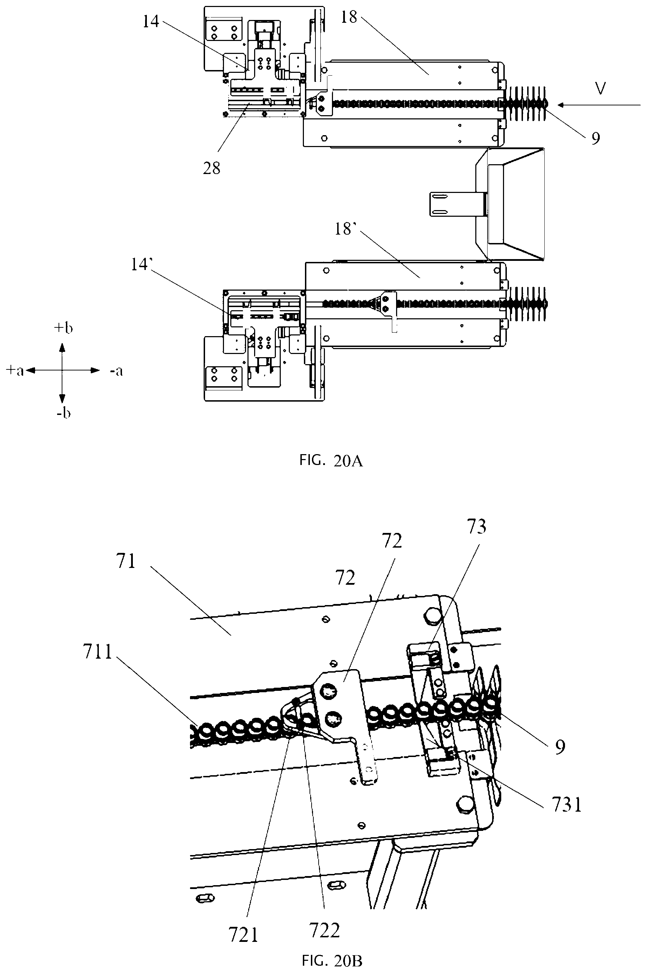

FIG. 20A is a plan view of a transport device according to an embodiment of the present disclosure. FIG. 20B is a schematic structural view of a transport device according to an embodiment of the present disclosure. As shown in FIGS. 20A and 20B, a transport device 18 is provided between the material feeding machine (not shown) and the transfer device 14, and a transport device 18' is provided between the material feeding machine (not shown) and the transfer device 14. Taking the transport device 18 as an example, the transport device 18 transports a plurality of packaging assemblies 9 into the transfer device 14, for example, into the guide channel 28, along a conveying direction V. For example, the transport device 18 includes a plate body 71 provided with a transport channel 711 and a propelling assembly 72, wherein the packaging assembly 9 is located in the transport channel 711, and the propelling assembly 72 is configured to push the packaging assembly 9 to enter the transfer device 14 in an extension direction of the transport channel 711 (e.g., the conveying direction V shown in the figure).

For example, the propelling assembly 72 includes a clamping jaw 721 that can be opened and closed, and the clamping jaw 721 has an open state and a closed state. When the clamping jaw 721 is in an initial position, it is in the closed state and abuts against the packaging assembly 9. The clamping jaw 721 moves in the +a direction, which can push the plurality of packaging assemblies 9 located on one side (e.g., the left side as shown in the figure) of the clamping jaw 721 close to the transfer device 14 into the guide channel 28. The number of the packaging assemblies 9 pushed into the guide channel 28 may be set according to actual conditions, for example, the number of packaging assemblies 9 is equal to the number of pushing assemblies, so that better engagement with the pushing assemblies can be achieved. In this embodiment, the number of pushing assemblies is three (e.g., pushing assemblies 140a, 140b, and 140c), and thus the number of pushed packaging assemblies 9 is also three. The propelling assembly 72 pushes three packaging assemblies 9 into the guide channel 28 each time, and then the three packaging assemblies 9 are pushed to target positions by the three pushing assemblies 140a, 140b, and 140c, respectively, thereby realizing batch automatic production at a certain cadence and improving production efficiency. After the preset number of packaging assemblies 9 are pushed, the clamping jaw 721 returns to the initial position in the -a direction to complete the reset. In order to avoid the mutual interference between the clamping jaw 721 and the packaging assembly 9 located in the transport channel 711 during the reset process, the clamping jaw 721 is in the open state to avoid the packaging assembly 9. When the clamping jaw 721 returns to the initial position, the clamping jaw 721 will return to the closed state. For example, a return spring 722 is provided on the clamping jaw 721, and the clamping jaw 721 can return to the closed state under the action of the return spring 722, thereby completing one propelling action. The propelling assembly 72 repeatedly performs the above process until all the packaging assemblies 9 are pushed. In the embodiment of the present disclosure, the propelling assembly 72 may be driven by a driver to reciprocate in the a direction.

For example, the transport device 18 may further include a one-way stop assembly 73 provided on the side (e.g., the right side shown in the figure) of the propelling assembly 72 away from the transfer device 14. The one-way stop assembly 73 is fixed on the plate body 71 and configured to prevent the packaging assembly 9 from moving in the -a direction. In other words, the one-way stop assembly 73 allows the packaging assembly 9 to move unidirectionally in the +a direction, but does not allow the packaging assembly 9 to move backward. With the above arrangement, the number of packaging assemblies 9 in the transport channel can be prevented from decreasing when the material feeding machine is unexpectedly stopped, thereby reducing the impact on the downstream pretreatment device and filling device that are still operating. For example, the one-way stop assembly 73 includes two one-way stoppers 731 provided oppositely, and each one-way stopper 731 is provided to rotate toward the direction close to the propelling assembly 72 (e.g., the arrow direction shown in FIG. 20B) when the packaging assembly 9 moves in the +a direction, to allow the packaging assembly 9 to pass through a gap between the two one-way stoppers. Moreover, when the packaging assembly 9 moves in the -a direction, the two one-way stoppers 731 remain stationary, thereby achieving the one-way stopping effect.

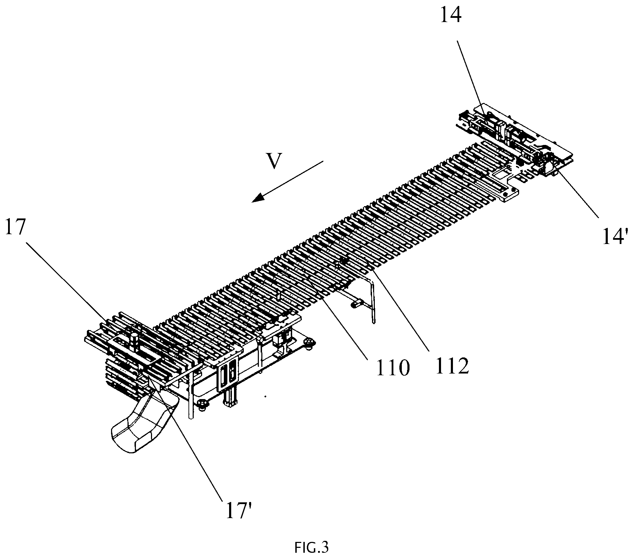

FIG. 3 is a schematic structural view of a conveying device according to an embodiment of the present disclosure.

For example, referring to FIGS. 1 and 3, the supply device 10 and the conveying device 11 are located outside the sterile chamber 1, and the pretreatment device 12 and the filling device 13 are located inside the sterile chamber 1.

In the related art, the conveying device is provided in the sterile chamber, which increases the number of devices provided in the sterile chamber, and makes it difficult to achieve sterile control or management for a larger number of devices, resulting in a low sterility level in the sterile chamber.

In the embodiment of the present disclosure, by providing the conveying device 11 outside the sterile chamber 1, the number of devices in the sterile chamber is reduced, making it easier to realize the sterile management or control for a smaller number of devices in the sterile chamber, which is advantageous to improve the sterility level in the sterile chamber.

For example, referring to FIGS. 1 and 3, the conveying device 11 is configured to convey the packaging assembly 9 from the supply device 10 outside the sterile chamber 1 into the sterile chamber 1. The conveying device 11 includes a movable conveying assembly, and the conveying assembly includes a movable conveyor belt 110 and a holding member 112 provided on the conveyor belt 110. The packaging assembly 9 may be held in the holding member 112.

With the above arrangement, when the conveyor belt 110 moves in the conveying direction V, both the holding member 112 located on the conveyor belt 110 and the packaging assembly 9 in the holding member 112 move in the conveying direction V, thereby enabling the packaging assembly 9 to be conveyed from the outside of the sterile chamber to the inside of the sterile chamber. The conveyor belt 110 is driven by a drive mechanism such as a motor, for example.

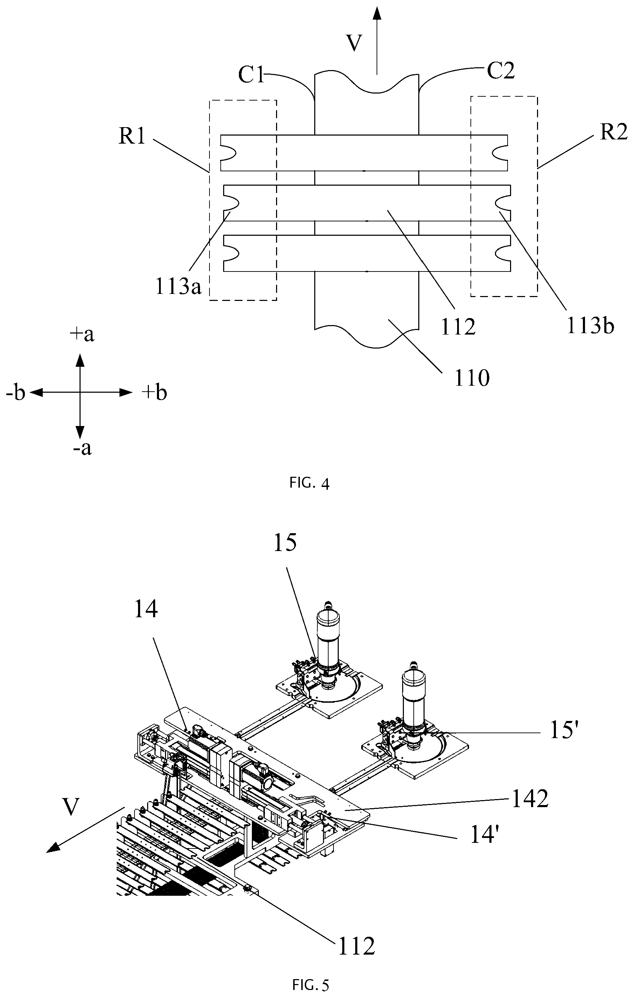

FIG. 4 is a schematic structural view of a holding member according to an embodiment of the present disclosure. As shown in FIG. 4, the holding member 112 is configured to hold the packaging assembly 9 therein at the target position and to bring the packaging assembly 9 from the target position into the sterile chamber 1. The holding member 112 includes a first jaw portion 113a and a second jaw portion 113b opposite to each other in an extension direction (e.g., the a direction shown in the figure) of the holding member, and the first jaw portion 113a and the second jaw portion 113b are respectively located on two opposite sides of the conveyor belt 110 perpendicular to the conveying direction V, for example, on a first side C1 and a second side C2 opposite to each other in the b direction shown in the figure. That is, the first jaw portion 113a and the second jaw portion 113b of the holding member 112 protrude toward the first side C1 and the second side C2 of the conveyor belt 110, respectively. By providing the first jaw portion 113a and the second jaw portion 113b, two packaging assemblies 9 can be simultaneously held on the same holding member 112 separately, so that double conveying channels located on two sides of the conveyor belt 110 can be formed. For example, taking the first jaw portion 113a as an example, the spout 91 of the packaging assembly 9 may be hung in the first jaw portion 113a, such that the packaging assembly 9 is in a suspended state.

For example, as shown in FIGS. 3 and 4, a plurality of holding members 112 are provided on the conveyor belt 110, and the plurality of holding members 112 are spaced apart in the conveying direction V. The plurality of holding members 112 include a plurality of first jaw portions 113a and a plurality of second jaw portions 113b. For example, the conveyor belt 110 includes a first jaw portion group R1 and a second jaw portion group R2, the first jaw portion group R1 is located on the first side C1 of the conveyor belt 110 and includes a plurality of first jaw portions 113a, and the second jaw portion group R2 is located on the second side C2 of the conveyor belt 110 and includes a plurality of second jaw portions 113b. With the above arrangement, a plurality of packaging assemblies 9 can be conveyed on each of two opposite sides of the conveyor belt 110, thereby increasing the number of packaging assemblies conveyed and improving conveying efficiency.

In the related art, the conveying device includes a screw rod, and in the process of conveying the packaging assembly, the screw rod will move up and down to cause undulation, which disrupts the directional airflow in the sterile chamber and increases the risk of bacterial contamination.

In the embodiments of the present disclosure, by using the conveyor belt to replace the screw rod, the smoother movement of the conveyor belt in the conveying process can avoid affecting the directional airflow in the sterile chamber, thereby reducing the risk of bacterial contamination.

In the embodiment of the present disclosure, in the process of conveying the packaging assembly 9 from the outside of the sterile chamber 1 into the sterile chamber 1, the conveyor belt 110 and the holding member 112 are always located outside the sterile chamber 1, thereby further reducing the risk of bacterial contamination. After the packaging assembly 9 enters the sterile chamber 1, the pouch 92 is still located outside the sterile chamber 1 because it is located below the holding member 112, but the portion of the spout 91 located above the holding member 112 enters the sterile chamber 1. Thus, the spout 91 can also be used to perform operations such as preheating, sterilization, drying, filling, etc. on the packaging assembly 9 while ensuring that the sterile chamber has a high sterility level.

Returning to FIG. 1, the pretreatment device 12 located inside the sterile chamber 1 is configured to pretreat the packaging assembly 9. The pretreatment device 12 may include a sterilization device 122 used to disinfect and sterilize the interior of the packaging assembly 9, e.g. the pouch 92. For example, the sterilization device 122 includes at least one sterilization nozzle (not shown) configured to be aligned with the spout 91, so that gas and/or liquid for sterilization enters the pouch 92 through the spout 91.

For example, the pretreatment device 12 may further include a preheating device 121 provided before the sterilization device 122 in the conveying direction V, the preheating device being used to preheat the packaging assembly 9 before sterilization, so as to further improve the sterilization effect. For example, the preheating device 121 includes at least one preheating nozzle (not shown) configured to be aligned with the spout 91, so that gas for preheating enters the pouch 92 through the spout 91.

For example, the pretreatment device 12 may further include a drying device 123 provided after the sterilization device 122 in the conveying direction V, the drying device being used to dry the packaging assembly 9 after sterilization to prevent residue of gas or liquid for sterilization from remaining in the packaging assembly. For example, the drying device 123 includes at least one drying nozzle (not shown) configured to be aligned with the spout 91, so that gas and/or liquid for drying enters the pouch 92 through the spout 91.

Referring to FIG. 1, after the packaging assembly 9 enters the sterile chamber, the packaging assembly 9 sequentially passes through the preheating device 121, the sterilization device 122 and the drying device 123, and the spout 91 is sequentially aligned with the preheating nozzle, the sterilization nozzle and the drying nozzle to carry out preheating, sterilization and drying pretreatments, respectively. Thus, it is possible to improve the speed and efficiency of the pretreatment while ensuring that the sterile chamber has a high sterility level.

Referring to FIG. 1, the filling device 13 is configured to fill contents into the pouch 92. The contents are, for example, at least one of a solid and a liquid. The liquid may be a food item or an industrial product.

For example, the apparatus 1000 for manufacturing a packaging product may further include a capping device 16 located inside the sterile chamber 1. The conveying assembly is further configured to convey the packaging assembly 9 into the capping device 16 after the pouch 92 is filled with the contents, and the capping device 16 is configured to seal the packaging assembly 9 with a cap. In some embodiments, the cap is, for example, a screw cap, and the screw cap may be fitted with a thread on the tube body 91 to seal the spout 91 of the packaging assembly 9.

In the embodiments of the present disclosure, the capping device 16 is provided in a sterile chamber, so that bacterial contamination can be avoided during the caping process, thereby improving sterile management for the capping device.

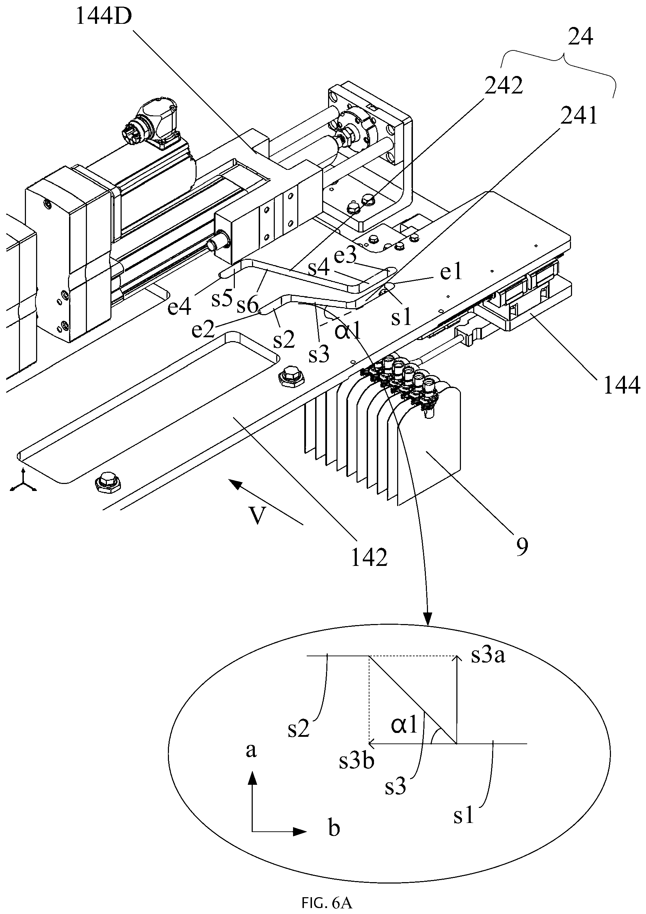

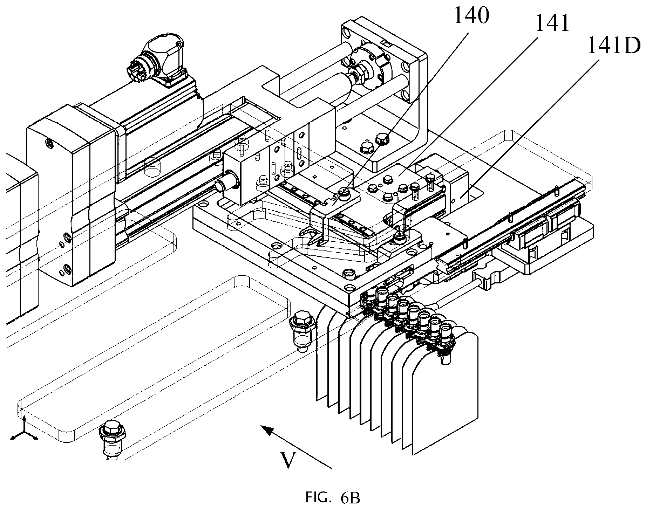

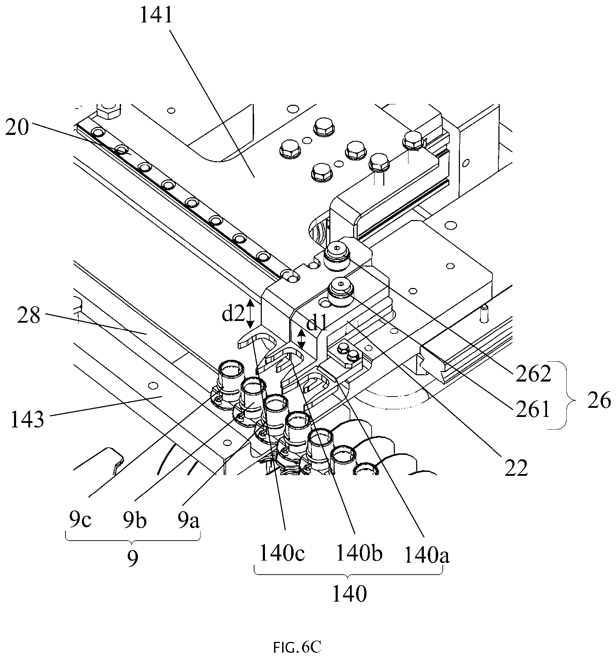

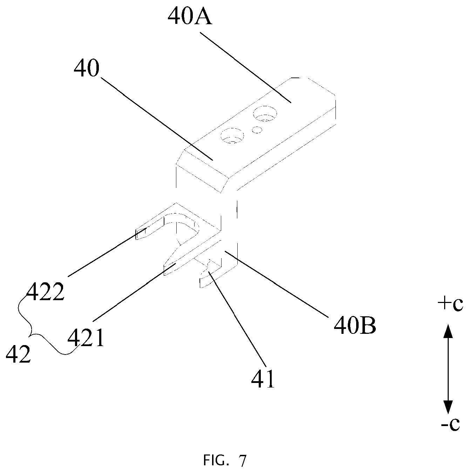

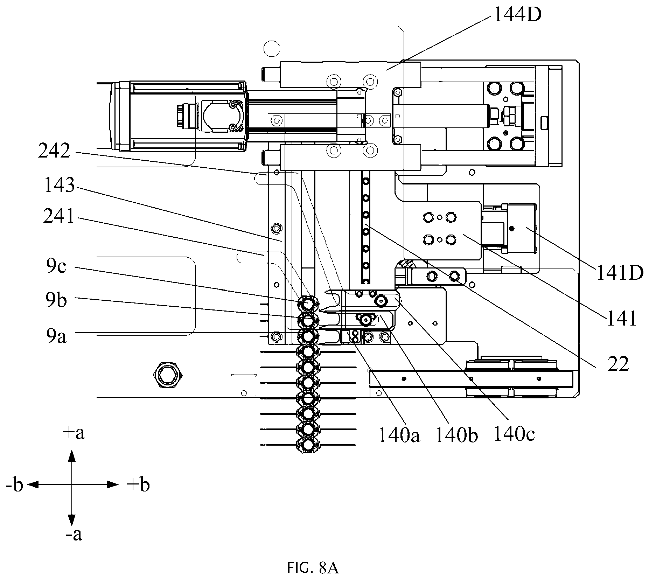

FIG. 5 is a schematic structural view of a buffer device and a transfer device according to an embodiment of the present disclosure. FIG. 6A is a first schematic structural view of a transfer device according to an embodiment of the present disclosure. FIG. 6B is a second schematic structural view of a transfer device according to an embodiment of the present disclosure. FIG. 6C is a third schematic structural view of a transfer device according to an embodiment of the present disclosure. FIG. 7 is a schematic structural view of a pushing assembly according to an embodiment of the present disclosure. FIGS. 8A to 8F are plan views of a transfer device according to an embodiment of the present disclosure in respective different states.

Referring to FIGS. 1, 3, 5, 6A and 6B, the apparatus 1000 for manufacturing further includes at least one transfer device, such as two transfer devices 14 and 14' shown in the figures. The two transfer devices 14 and 14' are provided on two opposite sides of the conveying assembly perpendicular to the conveying direction V (such as the b direction), respectively, so that each of the two transfer devices 14 and 14' can transfer a plurality of packaging assemblies to a plurality of holding members 112 on the respective same side of the conveyor belt 110. The following provides a detailed description using the transfer device 14 as an example.

For example, the transfer device 14 is located outside the sterile chamber 1 and between the supply device 10 and the conveying assembly. Further, for example, the transfer device 14 is located downstream of the supply device 10 and upstream of the holding member, and functions to distribute a relatively large number of upstream packaging assemblies 9 one by one to a downstream conveying assembly (e.g., holding members), so as to realize the transfer of the packaging assemblies 9.

Referring to FIG. 6C, the transfer device 14 includes at least one pushing assembly 140 (e.g., three pushing assemblies 140a, 140b, 140c), and the pushing assembly 140 is configured to push the packaging assembly 9 to a target position, such that the packaging assembly 9 is transferred to the holding member from the target position.

For example, as shown in FIG. 7, the pushing assembly 140 includes a connecting member 40 and a pushing member 41. The connecting member 40 includes a first end portion 40A and a second end portion 40B opposite to each other in an extension direction of the connecting member. The connecting member is connected to a support plate 141. The first end portion 40A may be connected to a guide member 26 (referring to FIG. 6C, which will be described in detail later), and the second end portion 40B extends in a third direction (e.g., the c direction shown in the figure) perpendicular to the support plate 141. The pushing member 41 is provided on the second end portion 40B. Referring to FIG. 2, the spout 91 includes a tube body 901 and a flange 902 surrounding the tube body 901, and the pushing member 41 is configured to abut against the flange 902 to push the packaging assembly 9 to the target position. By providing the pushing member 41, a small pushing force can be applied to the packaging assembly 9 while ensuring that the packaging assembly 9 is pushed to the target position, thereby avoiding violent shaking of the packaging assembly 9 during the pushing process.

For example, the pushing assembly 140 may further include a clamping jaw 42 provided on the second end portion 40B and spaced apart from the pushing member 41 in the third direction (e.g., the c direction shown in the figure), and the clamping jaw 42 is configured to at least partially surround the tube body 901 to guide the packaging assembly.

Due to the close arrangement of the plurality of packaging assemblies 9a, 9b and 9c in the guide channel 28, it is difficult to insert the pushing member 41 exactly between two packaging assemblies without the provision of the clamping jaw 42. In the embodiment of the present disclosure, the packaging assemblies 9a, 9b, and 9c may be separated by providing the clamping jaw 42, thereby providing a guiding function.

For example, as shown in FIG. 7, the pushing member 41 includes a pushing finger portion, and the pushing finger portion abuts against a part of the flange 902 of the packaging assembly to provide a pushing function. The clamping jaw 42 is located above the pushing finger portion 41, and a certain gap is left between the clamping jaw 42 and the pushing finger portion 41 in the c direction to enhance the guiding function.

For example, the clamping jaw 42 includes a first finger portion 421 and a second finger portion 422, the first finger portion 421 and the second finger portion 422 are opposite to each other in a diameter direction of the tube body 901 (e.g., the a direction shown in the figure), and the length of the first finger portion 421 is not equal to the length of the second finger portion 422. With the above arrangement, the guiding function of the clamping jaw 42 can be further enhanced. In some embodiments, the length of the first finger portion 421 is greater than the length of the second finger portion 422.

For example, the transfer device 14 may further include a movable support plate 141 and a first driver 141D. The pushing assembly 140 is provided on the support plate 141, and the first driver 141D is used to drive the support plate 141 to move the support plate 141 and the pushing assembly 140 in a second direction (e.g., the b direction). Herein, the term "moving in the b direction" includes movement in both positive and negative directions (+b direction or -b direction) along the b direction. Similarly, the movement in another direction also includes movement in both positive and negative directions along that direction.

Referring to FIGS. 8A to 8F, herein, the first direction is the a-direction (including the + a or -a direction) parallel to the support plate 141 and parallel to the conveying direction V, the second direction is the b-direction (including the +b or -b direction) parallel to the support plate 141 and perpendicular to the a-direction, and the third direction is the c-direction (including the +c or -c direction) perpendicular to the support plate 141. Herein, the term "direction parallel to the support plate" refers to a direction parallel to the plate surface of the support plate. Similarly, a direction parallel to another plate also refers to a direction parallel to the plate surface of that plate.

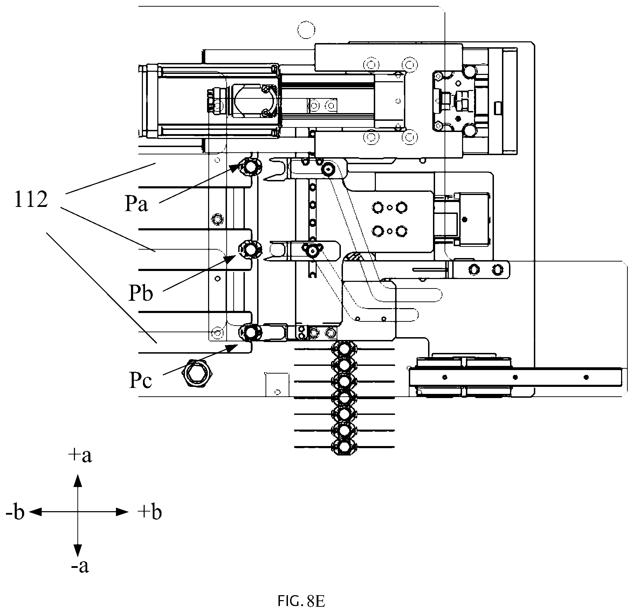

In some cases, the initial position of the packaging assembly 9 has a certain distance from the target position in the b direction (for example, the packaging assembly 9a of FIG. 8A has a certain distance from the target position Pa of FIG. 8E in the b direction). By providing the movable support plate 141 and disposing the pushing assembly 140 on the support plate 141, the pushing assembly 140 and the support plate 141 can simultaneously be moved in the b direction. For example, in the pushing process, the support plate 141 drives the pushing assembly 140 to move in the +b direction to approach the target position. After the pushing is completed, the support plate 141 drives the pushing assembly 140 to move in the -b direction to be away from the target position, so that the pushing assembly 140 is reset.

For example, referring to FIG. 6C, the transfer device 14 may further include a first guide assembly, and the first guide assembly includes a guide rail 20 and a movable sliding block 22. The guide rail 20 is provided on the support plate 141 and is parallel to the a direction. The sliding block 22 is slidably connected to the guide rail 20, that is, the sliding block 22 can move on the guide rail 20. The pushing assembly 140 is connected to the sliding block 22 and configured to move with the sliding block 22 in the a direction. Since the guide rail 20 extends in the a direction, the sliding block 20 and the pushing assembly 140 move together in the a direction.

In some cases, the packaging assembly 9 cannot be pushed to the target position only by the movement of the pushing assembly 140 in the b direction, because there is also a certain distance between the initial position and the target position of the packaging assembly 9 in the a direction (for example, the packaging assemblies 9b and 9c of FIG. 8A also have a certain distance from the target positions Pb and Pc of FIG. 8E in the a direction, respectively). By providing the guide rail 20 and the sliding block 22, and connecting the pushing assembly 140 to the sliding block 22, the sliding block 22 and the pushing assembly 140 can be moved in the a direction. For example, in the pushing process, the sliding block 22 drives the pushing assembly 140 to move in the +a direction to approach the target position. After the pushing is completed, the sliding block 22 drives the pushing assembly 140 to move in the -a direction to be away from the target position.

For example, the extension direction of the guide rail 22 is a straight line parallel to the a direction, so that the sliding block 22 and the pushing assembly 140 on the guide rail 22 move linearly to quickly approach the target position.

For example, referring to FIG. 6C, the transfer device 14 may further include a top plate 142 and a second guide assembly. The top plate 142 is located above the support plate 141. The second guide assembly includes a guide groove 24 provided on the top plate 142 and a guide member 26 provided on the pushing assembly 140. The guide member 26 is configured to move in the guide groove 24, so as to move the pushing assembly 140 in the extension direction of the guide groove 24. For example, the guide member 26 is connected to the first end portion 40A of the connecting member 40 to guide the pushing member 41 to move in the extension direction of the guide groove 24.

In the embodiments of the present disclosure, by providing the guide groove and the movable guide member, the movement direction and the movement distance of the pushing assembly 140 may be controlled according to the movement direction and the movement distance of the guide member in the guide groove, which is advantageous to more accurately push the packaging assembly 9 to the target position.

In the embodiment of the present disclosure, there may be a plurality of guide grooves, and there may be a plurality of guide members, and the plurality of guide grooves and the plurality of guide members are provided in one to-one correspondence to guide a plurality of pushing assemblies respectively.

For example, referring to FIG. 6A, the top plate 142 is provided with a plurality of guide grooves 24, the plurality of guide grooves 24 include a first guide groove 241 and a second guide groove 242 (simply referred to as guide grooves 241 and 242), and the guide grooves 241 and 242 are spaced apart from each other. Referring to FIG. 6C, the plurality of pushing assemblies 140 include a first pushing assembly 104a, a second pushing assembly 104b, and a second pushing assembly 104c (simply referred to as pushing assemblies 104a, 104b, and 104c), and the pushing assemblies 140b and 140c are provided with a first guide member 261 and a second guide member 262 (simply referred to as guide members 261 and 262), respectively. The guide member 261 is located in the guide groove 241 and moves in the extension direction of the guide groove 241 to guide the pushing assembly 140b to move. The guide member 262 is located in the guide groove 242 and moves in the extension direction of the guide groove 242 to guide the pushing assembly 140c to move.

In the embodiments of the present disclosure, the extension direction and length of the guide groove are designed according to the movement trajectory of the pushing assembly, and the movement trajectory of the pushing assembly is designed according to the initial position of the packaging assembly and the target position finally reached. Thus, the extension direction and length of the guide groove shown in the figures are only illustrative, and the embodiments of the present disclosure are not limited thereto. The following provides a detailed description using the guide groove 241 as an example.

For example, the guide groove 241 may include a plurality of sub-grooves including a first sub-groove s1, a second sub-groove s2, and a third sub-groove s3. The guide groove 241 includes a first end e1 and a second end e2 opposite to each other in the extension direction thereof, wherein the first sub-groove s1 is close to the first end e1, the second sub-groove s2 is close to the second end e2, and the third sub-groove s3 is located between the first sub-groove s1 and the second sub-groove s2 and separately connected to the first sub-groove s1 and the second sub-groove s2. Referring to FIGS. 6A and 8A, for example, the extension directions of the first sub-groove s1 and the second sub-groove s2 are the b direction, and the included angle α1 between the third sub-groove s3 and the b direction is an acute angle. Since the respective extension directions of the first sub-groove s1 and the second sub-groove s2 are different from the extension direction of the third sub-groove s3, the movement distance of the guide member 261 in the extension direction of each sub-groove can be controlled, thereby controlling the movement distance of the pushing assembly 140b in the extension direction of each sub-groove.

For example, an extension direction of at least a part of the guide groove 241 has components in the a direction and the b direction, such that the pushing assembly 140b simultaneously moves in the a direction and the b direction. Referring to FIGS. 6A and 8A, the first sub-groove s1 and the second sub-groove s2 extend in a straight line, and the third sub-groove s3 extends along an oblique line, that is, the included angle α1 between the oblique line and the b direction is an acute angle, and the third sub-groove s3 has a first component s3a in the a direction and a second component s3b in the b direction. Thus, when the guide member 261 moves in the third sub-groove s3, the movement trajectory of the guide member 261 has both a movement component in the b direction and a movement component in the a direction, such that the pushing assembly 140b simultaneously moves in the a direction and the b direction. In some embodiments, the included angle α1 is greater than zero degrees and less than 90 degrees; further, greater than 10 degrees and less than 90 degrees; and still further, greater than 45 degrees and less than 90 degrees.

For example, the guide groove 242 may include a plurality of sub-grooves including a first sub-groove s4, a second sub-groove s5, and a third sub-groove s6. The guide groove 242 includes a first end e3 and a second end e4 opposite to each other in the extension direction thereof, wherein the first sub-groove s4 is close to the first end e3, the second sub-groove s5 is close to the second end e4, and the third sub-groove s6 is located between the first sub-groove s4 and the second sub-groove s5 and separately connected to the first sub-groove s4 and the second sub-groove s5. The included angle α2 between the third sub-groove s6 and the b direction is also an acute angle.

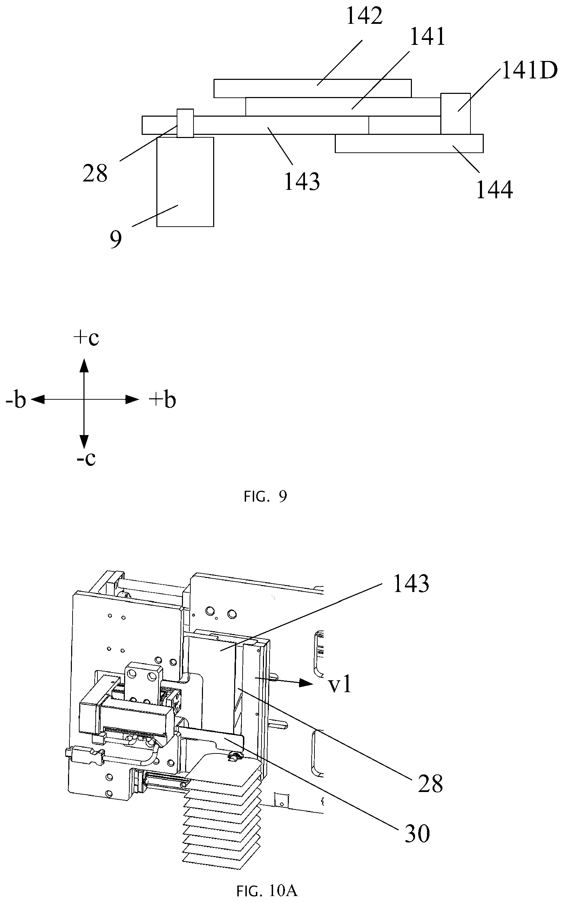

FIG. 9 is a simplified schematic cross-sectional view of a transfer device according to an embodiment of the present disclosure. As shown in FIG. 9, a top plate 142, a support plate 141, a guide plate 143, and a bottom plate 144 are sequentially provided in a direction from top to bottom.

For example, referring to FIGS. 6C and 9, the transfer device 14 may further include a guide plate 143. The guide plate 143 is provided with a guide channel 28 parallel to the conveying direction V, the packaging assembly 9 is guided into the guide channel 28, and the pushing assembly 140 pushes the packaging assembly 9 in the guide channel 28 to the target position.

In the embodiment of the present disclosure, by providing the guide plate 143 and the guide channel 28, on the one hand, the packaging assemblies 9 can be orderly arranged in a direction parallel to the conveying direction V before being pushed, thereby making the pushing process smoother; on the other hand, a predetermined number of packaging assemblies may be positioned in the guide channel 28, so that the pushing assemblies are conveniently aligned with respective pushing objects, i.e., packaging assemblies, before pushing.

For example, referring to FIGS. 6A and 9, the transfer device 14 may further include a bottom plate 144 and a second driver 144D. The guide plate 143 is connected to the bottom plate 144. The second driver 144D is used to drive the bottom plate 144, so as to move the bottom plate 144 and the guide plate 143 together in a direction parallel to the guide plate 143. For example, the support plate 141 and the guide plate 143 are parallel to each other, and thus, the movement in a direction parallel to the plane of the guide plate is the movement in a direction parallel to the support plate. By providing the bottom plate 144 and the second driver 144D and connecting the guide plate 143 to the bottom plate, the bottom plate 144 can drive the guide plate 143 and the packaging assembly 9 located in the guide channel 28 to move together in a direction parallel to the support plate.

For example, the bottom plate 144 and the guide plate 143 may move in the b direction under the drive of the second driver 144D. Thus, during the pushing process, the guide channel and the packaging assembly therein can be moved in the -b direction, so as to be released from the blocking range of the blocking member 30.

For example, the support plate 141 is located on the guide plate 143 and is configured to be movable in the b direction relative to the guide plate 143, so that the pushing assembly 140 provided on the support plate 141 can move in the b direction relative to the packaging assembly 9 in the guide channel 28. For example, during the pushing process, the pushing assembly 140 may move in the -b direction to contact and push the packaging assembly 9; after the pushing is completed, the pushing assembly 140 may move in the +b direction to be detached from the packaging assembly 9.

For example, the first driver 141D is connected to the bottom plate 144, and the first driver 141D, the support plate 141, and the pushing assembly 140 on the support plate 141 are configured to be movable together with the bottom plate 144 and the guide plate 143 in a direction parallel to the guide plate 143, for example, in the b direction, so that the pushing assembly 140 and the packaging assembly 9 located in the guide channel 28 simultaneously move in the b direction.

For example, the top plate 142 is configured to be fixed. In the embodiment of the present disclosure, the two top plates 142 of the two transfer devices 14 and 14' may be separate structures, or may be formed into an integrated structure (e.g., as shown in FIG. 5), which is not limited in the embodiment of the present disclosure.

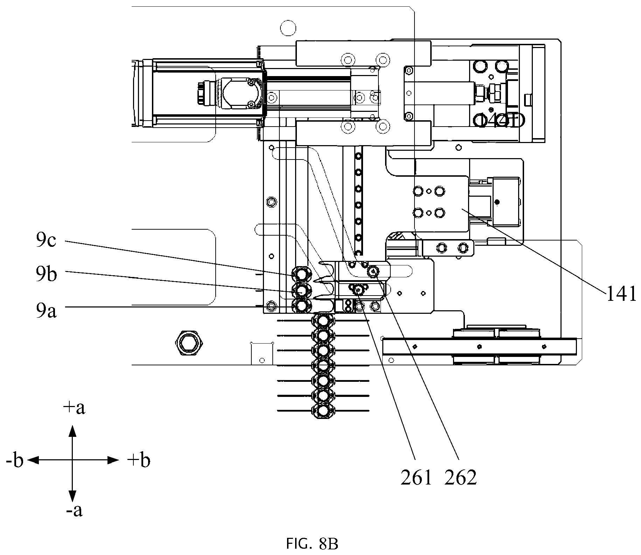

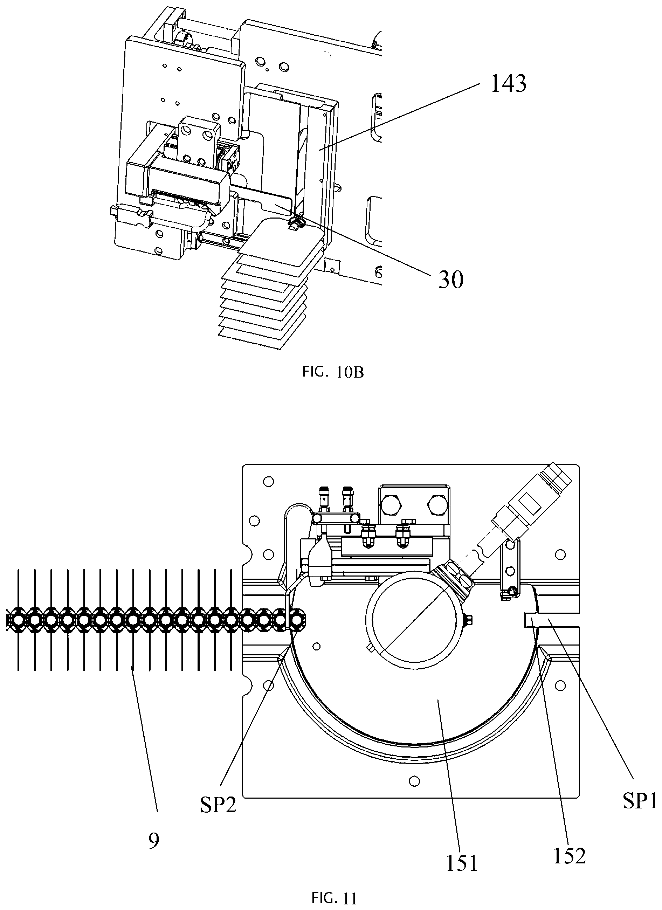

FIG. 10A is a schematic view showing the position of a blocking member according to an embodiment of the present disclosure in the state shown in FIG. 8A. FIG. 10B is a schematic view showing the position of the blocking member according to an embodiment of the present disclosure in the state shown in FIG. 8B. In FIG. 10A, the packaging assembly 9 is blocked by the blocking member 30, and in FIG. 10B, the packaging assembly 9 is no longer blocked by the blocking member 30.

For example, the transfer device 14 further includes a blocking member 30 configured to block the packaging assembly 9 in the guide channel 28 to position the packaging assembly 9 in the guide channel 28.

Without being blocked by the blocking member 30, the packaging assembly 9 of the guide channel 28 may continue to move in the guide channel 28. At this time, the position of the packaging assembly 9 relative to the pushing assembly 140 is uncertain, so that the pushing assembly 140 is not easily aligned with the packaging assembly 9 (for example, the three pushing assemblies 140a, 140b, and 140c in FIG. 8A cannot be aligned with the three packaging assemblies 9a, 9b, and 9c).

In the embodiment of the present disclosure, by providing the blocking member 30, the advancing direction of the packaging assembly 9 in the guide channel 28 can be blocked to achieve a positioning function, so that the pushing assembly 140 is substantially aligned with the pushed packaging assembly 9 before pushing. Here, "substantially aligned" means that the deviation is within ±10%. In actual production, the pushing assembly and the packaging assembly generally cannot be strictly aligned (that is, the center of the nozzle of the packaging assembly 9 and the center of the pushing assembly are located on the same straight line parallel to the b direction), because the width of the pushing assembly is greater than the width of the packaging assembly.

For example, as shown in FIG. 10A, the blocking member 30 is a stop plate, and the stop plate may extend in a direction (e.g., the b direction) intersecting the guide channel 28, to block the advancing direction of the packaging assembly 9 in the guide channel 28.

For example, the guide plate 143 is configured to be movable in the b direction (e.g., the -b direction) relative to the blocking member 30, so as to drive the packaging assembly 9 in the guide channel 28 out of the blocking range of the stop plate before pushing the packaging assembly 9. In some embodiments, the blocking member 30 is located below the guide plate 143 and connected to the top plate 142, and since the top plate 142 is fixed, the blocking member 30 is also fixed.

In the embodiment of the present disclosure, there are a plurality of packaging assemblies 9 and a plurality of pushing assemblies 140, and the plurality of pushing assemblies 140 are configured to push the plurality of packaging assemblies 9 to a plurality of target positions batch by batch. Thus, the transfer efficiency can be improved. Herein, the term "a plurality of" refers to two or more.

For example, referring to FIGS. 8A to 8F, the plurality of packaging assemblies 9 include a first packaging assembly 9a, a second packaging assembly 9b and a third packaging assembly 9c (simply referred to as packaging assemblies 9a, 9b and 9c), the plurality of pushing assemblies 140 include a first pushing assembly 104a, a second pushing assembly 104b and a second pushing assembly 104c (simply referred to as pushing assemblies 104a, 104b and 104c), and the plurality of target positions include a first target position Pa, a second target position Pb and a third target position Pc (simply referred to as target positions Pa, Pb and Pc). First, the three pushing assemblies 104a, 104b and 104c push the three packaging assemblies 9a, 9b and 9c to the three target positions Pa, Pb and Pc. Then, the three pushing assemblies 104a, 104b and 104c return to the initial positions, continue to push another three packaging assemblies, and so on. The pushing of all the packaging assemblies is completed batch by batch.

The transfer process of the transfer device 14 will be described in detail below with reference to FIGS. 8A to 8F.

Referring to FIG. 8A, the transfer device 14 is in a first state (e.g., an initial state), the pushing assemblies 104a, 104b and 104c are in initial positions, and the three packaging assemblies 9a, 9b and 9c enter the guide channel 28 and are arranged in the extension direction (e.g., the a direction) of the guide channel 28. Since the packaging assemblies 9a, 9b, and 9c are blocked by the blocking member 30 (as shown in FIG. 10A), the pushing assemblies 104a, 104b, and 104c can be aligned with the packaging assemblies 9a, 9b, and 9c, respectively. At this time, two guide members 261 and 262 provided on the guide grooves 104b and 104c are located at the distal ends (e.g., the right ends shown in the figure) of the guide grooves 241 and 242, namely, at the distal ends of the first sub-grooves s1, s4, respectively. Here, the term "distal end" or "proximal end" means that with the target position as a reference object, the end closer to the target position in the b direction is the proximal end, and the end farther from the target position is the distal end.

Referring to FIG. 8B, under the drive of the second driver 144D, the support plate 141 and the guide plate 143 (and the bottom plate 144 not shown in the figure) simultaneously move in the -b direction, so that the packaging assemblies 9a, 9b and 9c and the pushing assemblies 104a, 104b and 104c simultaneously move in the -b direction, and the packaging assemblies 9a, 9b and 9c are released from the blocking range of the blocking member 30. At this time, the transfer device 14 is in a second state. In this process, the two guide members 261 and 262 move in the two first sub-grooves s1 and s4, respectively, to guide the pushing assemblies 104b and 104c to move in the +b direction.

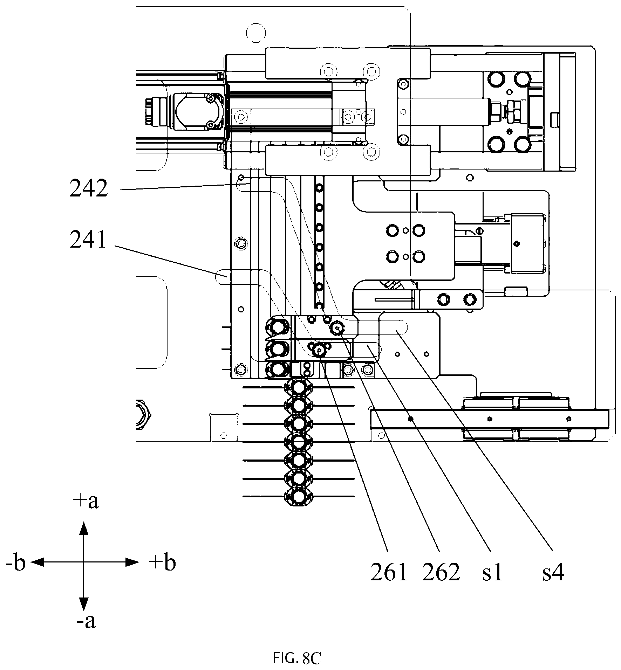

Referring to FIG. 8C, under the drive of the first driver 141D, only the support plate 141 continues to move in the -b direction, so that the pushing assemblies 104a, 104b, and 104c continue to move in the -b direction, and abut against the packaging assemblies 9a, 9b, and 9c, respectively. At this time, the transfer device 14 is in a third state, and the two guide members 261 and 262 are located at the proximal ends of the two first sub-grooves s1 and s4, respectively. During the transition from the second state to the third state, the guide plate 143 and the packaging assemblies 9a, 9b and 9c remain stationary.

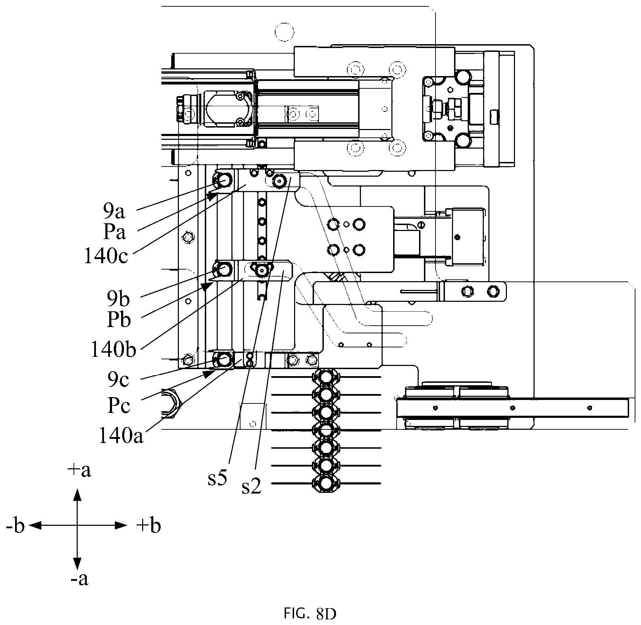

Referring to FIG. 8D, under the drive of the second driver 144D, the support plate 141 and the guide plate 143 (and the bottom plate 144 not shown in the figure) simultaneously move in the -b direction, so that the pushing assemblies 104a, 104b and 104c push the packaging assemblies 9a, 9b and 9c to the three target positions Pa, Pb and Pc, respectively. At this time, the transfer device 14 is in a fourth state. In this process, since the pushing assembly 104a is fixedly connected to the support plate 41, the pushing assembly 104a only moves in the -b direction, and does not move in the a direction. Since the pushing assemblies 104b and 104c are slidably connected to the support plate 141, under the guiding action of the two guide members 261 and 262, the pushing assemblies 104b and 104c move in the extension directions of the guide grooves 241 and 242, respectively, moving not only in the -b direction but also in the + a direction, until the two guide members 261 and 262 are close to the proximal ends of the two guide grooves 241 and 242, respectively, namely, approaching the proximal ends of the two second sub-grooves s2 and s5. The pushing assemblies 104b and 104c push the packaging assemblies 9a, 9b and 9c to the target positions Pa, Pb and Pc, respectively.

As can be seen from FIGS. 8C and 8D, the spacing between two adjacent pushing assemblies among the pushing assemblies 104a, 104b and 104c in the a direction is variable, so that the packaging assemblies 9b and 9c are closer to the respective target positions Pb and Pc in the a direction.

For example, before the packaging assemblies 9b and 9c reach the target positions Pb and Pc, the spacing between the pushing assemblies 104b and 104c gradually increases, so that the packaging assemblies 9b and 9c can be further closer to the respective target positions Pb and Pc in the a direction. Similarly, before the packaging assemblies 9a and 9b reach the target positions Pa and Pb, the spacing between the pushing assemblies 104a and 104b gradually increases, so that the packaging assemblies 9a and 9b can be further closer to the respective target positions Pa and Pb in the a direction.

Referring to FIG. 8E, under the drive of the first driver 144D, the support plate 141 moves in the +b direction to retract the pushing assemblies 104a, 104b and 104c in the +b direction to be detached from the packaging assemblies 9a, 9b and 9c. At this time, the three holding members 112 reach the target positions Pa, Pb and Pc and hold the packaging assemblies 9a, 9b and 9c therein, respectively. At this time, the transfer device 14 is in a fifth state. In this process, the two guide members 261 and 262 move in the +b direction in the two second sub-grooves s2 and s5, respectively, to guide the pushing assemblies 104a, 104b, and 104c to move in the +b direction.

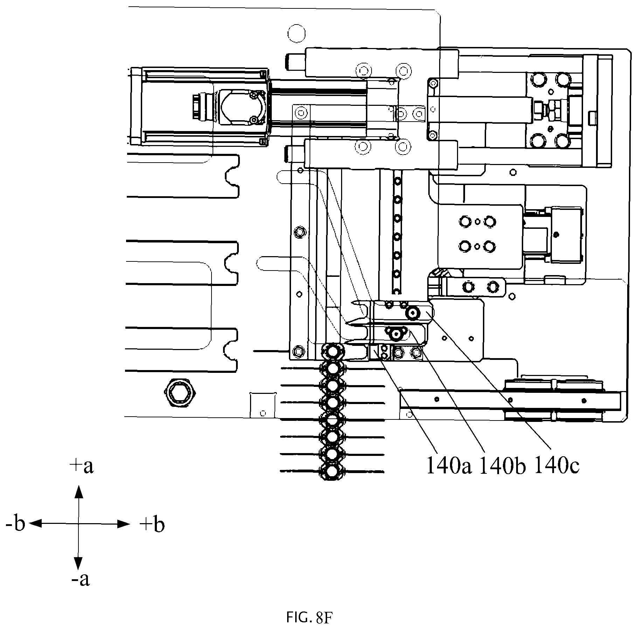

Referring to FIG. 8F, under the drive of the second driver 144D, the support plate 141 and the guide plate 143 (and the bottom plate 144 not shown in the figure) move in the +b direction, so that the pushing assemblies 104a, 104b, and 104c return to the initial positions. In this process, the pushing assembly 104a moves in the +b direction to be away from the target position Pc. The pushing assemblies 104b and 104c move in the +b direction and the - a direction, respectively, to move away from the target positions Pa and Pb, and finally return to the initial positions. Next, the transfer device 14 is changed to the first state of FIG. 8A again, and the process of FIGS. 8A to 8F is repeated.

In some embodiments, the two clamping jaws 42 of two adjacent pushing assemblies 140 among the plurality of pushing assemblies 140 have unequal vertical distances to the support plate 141. The plurality of pushing assemblies 140 include a plurality of clamping jaws, and heights of two adjacent clamping jaws 42 of two adjacent pushing assemblies 140 are different. For example, referring to FIG. 6C, the vertical distance (i.e., the distance in the c direction, not shown) from the clamping jaw of the pushing assembly 140a to the support plate 141 is not equal to the vertical distance d1 from the clamping jaw of the pushing assembly 140b to the support plate 141, and the vertical distance d1 from the clamping jaw of the pushing assembly 140b to the support plate 141 is not equal to the vertical distance d2 from the clamping jaw of the pushing assembly 140c to the support plate 141.

In order to separate the three packaging assemblies 9a, 9b and 9c, the width of the clamping jaw 42 of each pushing assembly 140 is set to be wider than the diameter of the tube body. If the plurality of jaws 42 are provided at the same height, they may collide with each other to cause interference. In the embodiment of the present disclosure, by setting the heights of the two clamping jaws 42 of the two adjacent pushing assemblies 140 to be different from each other, mutual interference can be avoided, and the guiding function of the clamping jaws can be improved.

Referring to FIG. 1, in the embodiment of the present disclosure, a buffer device 15 may be further provided between the transfer device 14 and the supply device 10 to adjust the supply time interval of the packaging assemblies. Referring to FIG. 5, the apparatus 1000 for manufacturing a packaging product may further include at least one buffer device 15, for example, two buffer devices 15 and 15' in the figure provided on two opposite sides of the conveying assembly perpendicular to the conveying direction V (e.g., the direction b), respectively, so that each can buffer the supply time interval of the plurality of packaging assemblies on the respective same side. The following provides a description using the buffer device 15 as an example.

For example, the buffer device 15 is located outside the sterile chamber 1 and between the supply device 10 and the transfer device 14 to buffer the supply time interval of the packaging assemblies 9.

If the buffer device is not provided, the distance between the transfer device 14 and the supply device 10 will be relatively large, and the pushing force required in the process of pushing the packaging assembly from the supply device 10 to the transfer device 14 will increase, so that the packaging assembly may be stuck in the transporting channel. By providing the above buffer device, a buffer distance can be provided, and the distance between the packaging assembly 9 and the conveying device 11 can be ensured to be relatively smaller without applying an excessive pushing force to the packaging assembly 9.

FIG. 11 is a plan view of a buffer device according to an embodiment of the present disclosure. As shown in FIG. 11, for example, the buffer device 15 includes a rotating component having a holding portion that holds the packaging assembly 9 and is configured to rotate the holding portion and the packaging assembly 9 from a first position SP1 away from the transfer device 14 to a second position SP2 close to the transfer device 14. By providing the rotating component, the packaging assembly 9 can be brought closer to the transfer device 14 without applying a large pushing force to the packaging assembly 9.

For example, the rotating component includes a turntable 151, an outer edge of the turntable 151 is provided with a notch 152, and the packaging assembly 9 is configured to be hung in the notch 152 such that the packaging assembly 9 is in a suspended state. The turntable and the notch is configured such that the packaging assembly 9 is in a suspended state, which can prevent the appearance of the packaging assembly 9 from scratch or damage during the transfer process.

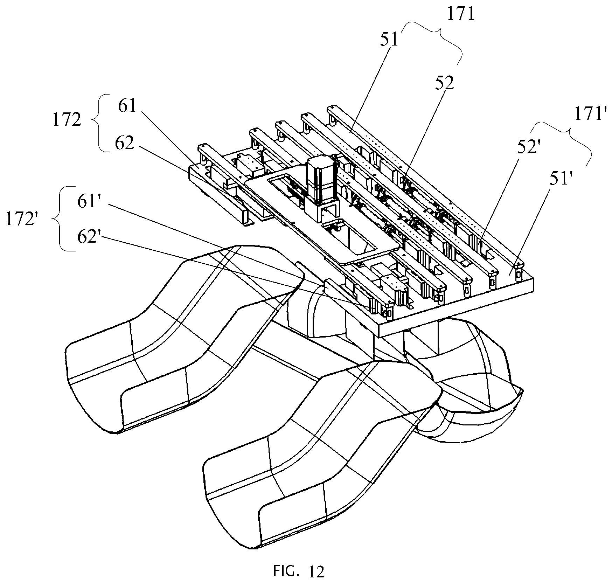

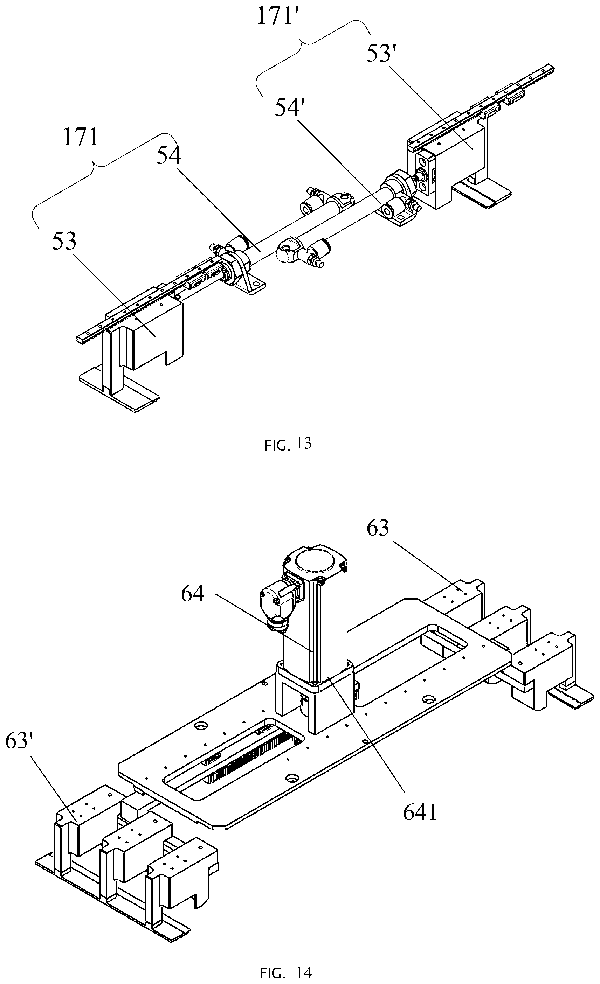

FIG. 12 is a schematic structural view of a discharging device according to an embodiment of the present disclosure. FIG. 13 is a schematic structural view of a first discharging assembly according to an embodiment of the present disclosure.

For example, referring to FIGS. 1, 3, and 12, the apparatus 1000 for manufacturing a packaging product may further include at least one discharging device. For example, two discharging devices 17 and 17' are provided on two opposite sides of the conveying assembly perpendicular to the conveying direction V (e.g., the b direction), respectively, so that each can remove a plurality of packaging assemblies on the respective same side. The following provides a description using the discharging device 17 as an example.

For example, the discharging device 17 is located outside the sterile chamber 1, the conveying assembly is further configured to convey the packaging assembly 9 into the discharging device 17 after the pouch 92 is filled with the contents, and the discharging device 17 is configured to remove the packaging assembly 9 from the conveying assembly, the packaging assembly 9 being with or without a cap. That is, the discharging device 17 is located downstream of the filling device 13. The discharging device 17 functions to remove packaging assemblies 9 filled with the contents from the conveying assembly, including removing compliant or non-compliant packaging assemblies.

For example, the discharging device 17 includes at least one first discharging assembly 171 (e.g., six shown in the figure) close to the sterile chamber 1 and at least one second discharging assembly 172 (e.g., six shown in the figure) away from the sterile chamber 1, the first discharging assembly 171 is configured to remove non-compliant packaging assemblies 9 from the conveying assembly, and the second discharging assembly 172 is configured to remove compliant packaging assemblies 9 from the conveying assembly.

In the related art, the discharging device 17 includes only one discharging assembly, the discharging assembly removes both compliant products and non-compliant products, and then a sorting mechanism sorts out the compliant products. In this way, the compliant products and non-compliant products are not easily distinguished, the sorting efficiency is low, and the time consumption is long.

In the embodiments of the present disclosure, by providing the first discharging assembly 171 and the second discharging assembly 172, the non-compliant products and the compliant products can be directly sorted from the conveying assembly, thereby shortening the production time and improving the sorting efficiency.

For example, the first discharging assembly 171 includes a first discharging plate 51 and a first discharging pushing block 53, and the first discharging plate 51 is provided with a first discharging channel 52. The first discharging pushing block 53 is configured to push the non-compliant packaging assemblies 9 from the conveying assembly into the first discharging channel 52 and to drop the non-compliant packaging assemblies 9 when the non-compliant packaging assemblies are pushed to the discharging position on the first discharging channel 52.

By providing the first discharging plate 51 and the first discharging pushing block 53, it can be further ensured that the non-compliant packaging assemblies 9 drop from the first discharging channel 52, so as to collect the non-compliant packaging assemblies 9.

In some embodiments, the first discharging assembly further includes a first discharging drive mechanism, and the first discharging drive mechanism is used to drive the first discharging pushing block. There are a plurality of first discharging assemblies, and a plurality of first discharging pushing blocks of the plurality of first discharging assemblies are independently driven by respective first discharging drive mechanisms thereof.

For example, the plurality of first discharging assemblies include two first discharging assemblies 171 and 171', and the two first discharging assemblies 171 and 171' include two first discharging drive mechanisms 54 and 54', respectively. The two first discharging drive mechanisms 54 and 54' are used to drive the two first discharging pushing blocks 53 and 53', respectively, that is, the two first discharging pushing blocks 53 and 53' are independently driven by the two first discharging drive mechanisms 54 and 54'. With the above arrangement, the non-compliant products can be removed in a targeted manner according to different positions of the non-compliant products (e.g., on one side or two sides of the conveying assembly), thereby avoiding the removal of the compliant products.

In the embodiment of the present disclosure, referring to FIG. 12, the first discharging assembly 171' further includes a first discharging plate 51', the first discharging plate 51' is provided with a first discharging channel 52', and the structure of the first discharging assembly 171' is the same as the structure of the first discharging assembly 171, which will not be repeated here.

In some embodiments, there are a plurality of first discharging assemblies 171, the plurality of first discharging assemblies 171 are configured to remove a plurality of non-compliant packaging assemblies 9, and the plurality of non-compliant packaging assemblies 9 may have equal or unequal movement distances after entering respective first discharging channels 52 thereof.

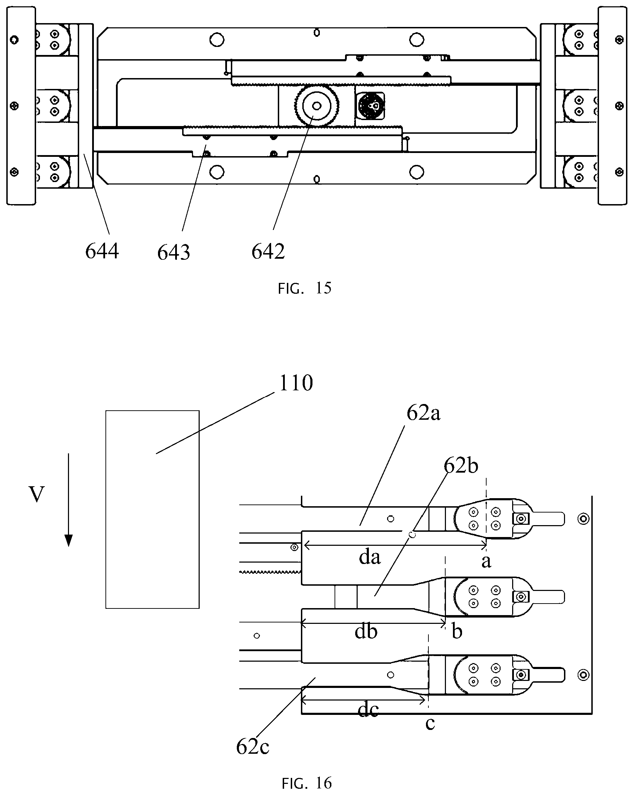

FIG. 14 is a schematic structural view of a second discharging assembly according to an embodiment of the present disclosure. FIG. 15 is a bottom view of the second discharging assembly of FIG. 14.

Referring to FIGS. 12 and 14, the second discharging assembly 172 includes a second discharging plate 61 and a second discharging pushing block 63. The second discharging plate 61 is provided with a second discharging channel 62. The second discharging pusher 63 is configured to push the compliant packaging assemblies 9 from the conveying assembly into the second discharging channel 62 and to drop the compliant packaging assemblies 9 when the compliant packaging assemblies are pushed to the discharging position on the second discharging channel 62.

By providing the second discharging plate 61 and the second discharging pushing block 63, it can be further ensured that the compliant packaging assemblies 9 drop from the second discharging channel 62, so as to collect the compliant packaging assemblies 9.

In some embodiments, the second discharging assembly further includes a second discharging drive mechanism used to drive the second discharging pushing block, wherein there are a plurality of second discharging assemblies, and a plurality of second discharging pushing blocks of the plurality of second discharging assemblies are driven by a same second discharging drive mechanism.

For example, the plurality of second discharging assemblies include two second discharging assemblies 172 and 172', the second discharging assembly 172 further includes a second discharging drive mechanism 64 used to drive the second discharging pushing block 63, the second discharging assembly 172' further includes a second discharging pushing block 63', and the two second discharging pushing blocks 63 and 63' are driven by the same second discharging drive mechanism 64. With the above arrangement, the discharging speed of compliant products can be increased.

In the embodiment of the present disclosure, referring to FIG. 12, the second discharging assembly 172' further includes a second discharging plate 61', the second discharging plate 61' is provided with a second discharging channel 62', and the structure of the second discharging assembly 172' is the same as the structure of the second discharging assembly 172, which will not be repeated here.

In some embodiments, there are a plurality of second discharging assemblies 172, the plurality of second discharging assemblies 172 are configured to remove a plurality of compliant packaging assemblies 9, and the plurality of compliant packaging assemblies 9 have unequal movement distances after entering respective second discharging channels 62 thereof.

FIG. 16 is a plan view of a plurality of second discharging channels according to an embodiment of the present disclosure. For example, as shown in FIG. 16, three second discharging assemblies 172 are provided on the same side of the conveying assembly (e.g., the conveyor belt 110), and include three second discharging channels 62a, 62b and 62c, respectively. The width of each discharging channel at the discharging position increases, and the width is, for example, larger than the diameter of the cap. The compliant product will have a certain movement distance after entering the channel, and when reaching the discharging position, the compliant product drops from the channel because the width of the channel is greater than the diameter of the cap.

For example, the movement distance of the packaging assembly 9 after entering the second discharging channel 62a is dc, the movement distance of the packaging assembly 9 after entering the second discharging channel 62b is db, and the movement distance of the packaging assembly 9 after entering the second discharging channel 62c is dc, where da > db > dc. Thus, by making the falling positions of the channels not on the same straight line (for example, the straight line is a straight line parallel to the conveying direction V), it is possible to avoid mutual collisions between different discharging channels when a plurality of products fall simultaneously.

In the embodiment of the present disclosure, the three movement distances da, db and dc are set to gradually decrease along the conveying direction V only for illustration, as long as the falling positions of the channels are not on the same straight line, for example, in other embodiments, the three movement distances da, db and dc may also be set to gradually increase along the conveying direction V, which is not limited in the embodiment of the present disclosure.

For example, referring to FIG. 14, the second discharging assembly 172 may include a plurality of second discharging pushing blocks 63 (e.g., three second discharging pushing blocks), the second discharging assembly 172' may include a plurality of second discharging pushing blocks 63' (e.g., three second discharging pushing blocks), and the plurality of second discharging pushing blocks 63 and the plurality of second discharging pushing blocks 63' may be driven by the same second discharging drive mechanism 64, thereby further increasing the discharging speed of compliant products.

For example, referring to FIG. 15, the second discharging drive mechanism 64 includes a motor 641, at least one gear 642 (e.g., two gears), at least one rack 643 (e.g., two racks), and at least one pushing block connector 644 (e.g., two pushing block connectors). The motor 641 is used to drive the gear 642 to rotate, and the gear 642 meshes with the rack 643 to control the extension or retraction of the rack 643. The pushing block connector 644 is provided at an end portion of the rack 643 and connected to the plurality of second discharging pushing blocks 63, so that the plurality of second discharging pushing blocks 63 move simultaneously with the rack. With the above arrangement, it can be ensured that the plurality of second discharging pushing blocks 63 move synchronously, making different second discharging channels have the same discharging speed.

In the embodiment of the present disclosure, the second discharging drive mechanism may also adopt another structure. For example, the second discharging drive mechanism includes a first rotating member and at least one connecting rod, wherein the first rotating member may be driven to rotate, one end of the connecting rod is connected to the first rotating member, and the other end of the connecting rod is connected to the plurality of second discharging pushing blocks. The connecting rod may be driven by the rotation of the first rotating member to push the plurality of second discharging pushing blocks to move. With the above arrangement, it can also be ensured that the plurality of second discharging pushing blocks move synchronously, making different second discharging channels have the same discharging speed.

In the embodiments of the present disclosure, when removing the compliant products or non-compliant products, a driving signal (e.g., an electrical signal) may be provided to the first discharging drive mechanism or the second discharging drive mechanism through the control device to control the timing of discharging.

For example, the apparatus 1000 for manufacturing includes a modular manufacturing assembly, the modular manufacturing assembly is detachably provided on a side (e.g., the first side C1 or the second side C2 shown in FIG. 4) where at least one of the first jaw portion group R1 and the second jaw portion group R2 is located, and the modular manufacturing assembly includes at least one of the transfer device 14, the buffer device 15 and the discharging device 17 located outside the sterile chamber 1.

Referring to FIGS. 3 to 5, in actual production, the transfer devices 14 and 14', the buffer devices 15 and 15 ' and the discharging devices 17 and 17' outside the sterile chamber 1 may be combined or disassembled according to actual needs.

For example, the apparatus 1000 for manufacturing includes a first modular manufacturing assembly, and the first modular manufacturing assembly may include the transfer device 14, the buffer device 15, and the discharging device 17 close to a first conveying channel R1. The manufacturing plant 1000 further includes a second modular manufacturing assembly, and second modular manufacturing assembly may include the transfer device 14', the buffer device 15' and the discharging device 17' close to a second conveying channel R2.

When only one of the first conveying channel R1 and the second conveying channel R2 (e.g., the first conveying channel R1) is used for conveying the packaging assemblies to produce packaging products, only the first modular manufacturing assembly close to one side of the first conveying channel R1 may be assembled. When both the first conveying channel R1 and the second conveying channel R2 convey packaging assemblies to produce packaging products, the first modular manufacturing assembly close to one side of the first conveying channel R1 and the second modular manufacturing assembly close to one side of the second conveying channel R2 may simultaneously be assembled. With the above arrangement, the flexibility of the apparatus for manufacturing in actual production can be improved.

In the above embodiments of the present disclosure, only one conveying assembly is provided. However, the number of conveying assemblies may be multiple, namely, two or more. When there are a plurality of conveying assemblies, the plurality of conveying assemblies have the same structure and are detachably connected therebetween. Since each conveying assembly provides one conveyor track, a plurality of conveying assemblies may provide a plurality of conveyor tracks, which not only increases the production processing capacity of the apparatus for manufacturing, but also improves the assembly flexibility of the apparatus.

FIG. 17 is a schematic flowchart of a method for manufacturing a packaging product according to an embodiment of the present disclosure. Referring to FIGS. 1 to 17, the method for manufacturing a packaging product includes the following steps:
S100: preparing a packaging assembly 9 outside a sterile chamber 1, the packaging assembly 9 including a pouch 92 having a spout 91;
S200: transferring the packaging assembly 9 to a target position outside the sterile chamber 1;
S300: conveying the packaging assembly 9 from the target position into the sterile chamber 1;
S400: pretreating the packaging assembly 9 inside the sterile chamber 1, the pretreating including sterilization; and
S500: filling contents into the pouch 92 inside the sterile chamber 1.

The above method not only enables assembly-line production of the packaging assembly 9 from manufacture to pretreatment and filling to obtain a final packaging product, but also achieves effective control of the sterile environment inside the sterile chamber and improves the quality of the packaging product.

For example, there are a plurality of packaging assemblies 9, and the above method for manufacturing may include the following steps:
S201: moving the plurality of packaging assemblies 9a, 9b and 9c to a plurality of target positions Pa, Pb and Pc outside the sterile chamber 1;
S301: conveying the plurality of packaging assemblies 9a, 9b and 9c from the plurality of target positions Pa, Pb and Pc into the sterile chamber 1.

For example, the plurality of packaging assemblies 9a, 9b and 9c are sequentially arranged in the conveying direction V. Moving the plurality of packaging assemblies 9a, 9b and 9c to the plurality of target positions Pa, Pb and Pc outside the sterile chamber in step S201 includes:
moving the plurality of packaging assemblies 9a, 9b and 9c in an a direction parallel to the conveying direction V and a b direction perpendicular to the conveying direction V, so as to cause the plurality of packaging assemblies 9a, 9b and 9c to reach the plurality of target positions Pa, Pb and Pc, respectively. In the movement process, a spacing between two adjacent packaging assemblies among the plurality of packaging assemblies 9a, 9b, and 9c in the a direction gradually increases.

Through the above step, the plurality of packaging assemblies 9a, 9b, and 9c can be moved closer to the respective target positions Pa, Pb, and Pc in the a direction, achieving quick and accurate movement.

For example, the above method for manufacturing includes: moving the plurality of packaging assemblies 9a, 9b and 9c to the plurality of target positions Pa, Pb and Pc batch by batch until all the packaging assemblies 9 are conveyed into the sterile chamber 1.

In the embodiment of the present disclosure, the plurality of packaging assemblies 9a, 9b, and 9c are transferred batch by batch as a group, which not only ensures the consistent filling cadence in the sterile chamber 1, but also can maintain the continuous and stable transferring and conveying of the packaging assemblies.

For example, before step S201, the above method for manufacturing may further include:
S601: guiding the plurality of packaging assemblies 9a, 9b and 9c into a guide channel 28;
S602: blocking the plurality of packaging assemblies 9a, 9b and 9c in the guide channel 28 to position the plurality of packaging assemblies 9a, 9b and 9c in the guide channel 28; and
S603: moving the guide channel 28 to drive the plurality of packaging assemblies 9a, 9b and 9c to be released from positioning.

In the above step, the positioning function is achieved by blocking the advancing direction of the packaging assembly 9 in the guide channel 28, so that the pushing assembly 140 is substantially aligned with the pushed packaging assembly 9 before pushing.

For example, before step S201, the above method for manufacturing may further include:
S700: buffering a supply time interval of packaging assemblies 9.

Through the above step, the distance between the packaging assembly 9 and the conveying device 11 can be ensured to be relatively smaller without applying an excessive pushing force to the packaging assembly 9.

For example, pretreating further includes preheating and drying. Before step S500, the above method for manufacturing may further include:
S800: sequentially performing preheating, sterilization and drying on the pouch 92.

In the above steps, preheating can improve the sterilization effect, and drying can prevent residue of gas or liquid for sterilization in the pouch 92, thereby further improving the quality of the packaging product.

For example, after step S500, the above method for manufacturing may further include:
S900: sealing the packaging assembly 9 with a cap inside the sterile chamber 1.

For example, after step S500, the above method for manufacturing may further include:
S1001: conveying the packaging assembly 9 to the outside of the sterile chamber 1;
S1002: removing, outside the sterile chamber 1, non-compliant packaging assemblies 9;
S1003: removing, outside the sterile chamber 1, complaint packaging assemblies 9.

In the above steps, by separately setting the removal of the non-compliant packaging assembly 9 and the removal of the compliant packaging assembly 9, the production time is shortened and the sorting efficiency is improved.

The apparatus and the method for manufacturing a packaging product provided according to the embodiments of the present disclosure described above not only enable assembly-line production of packaging assemblies from manufacture to pretreatment and filling to obtain final packaging products, but also achieve effective control of the sterile environment inside the sterile chamber and improve the quality of the packaging products.

Herein, the following points should be noted:
(1) The accompanying drawings of the embodiments of the present disclosure only relate to structures involved in the embodiments of the present disclosure. For other structures, reference may be made to conventional designs.
(2) Provided no conflict exists, the embodiments of the present disclosure and features in the embodiments may be combined with one another to obtain new embodiments.
(3) The above description is merely exemplary embodiments of the present disclosure and is not intended to limit the scope of protection of the present disclosure, which is defined by the appended claims.

## Claims

1. An apparatus for manufacturing a packaging product, comprising a sterile chamber, a supply device, a conveying device, a pretreatment device and a filling device, the supply device and the conveying device being located outside the sterile chamber, and the pretreatment device and the filling device being located inside the sterile chamber, wherein
- the supply device is configured to provide a packaging assembly, the packaging assembly comprising a packaging body having an opening portion;
- the conveying device is configured to convey the packaging assembly from the supply device outside the sterile chamber into the sterile chamber and comprises a movable conveying assembly;
- the pretreatment device is configured to pretreat the packaging assembly and comprises a sterilization device;
- the filling device is configured to fill contents into the packaging body;
wherein the apparatus for manufacturing further comprises:
- at least one transfer device located outside the sterile chamber and between the supply device and the conveying assembly, the transfer device comprising a pushing assembly configured to push the packaging assembly to a target position such that the packaging assembly is transferred to the conveying assembly from the target position.

2. The apparatus for manufacturing a packaging product according to claim 1, wherein the packaging assembly is configured such that, after the packaging assembly enters the sterile chamber, the packaging body is located outside the sterile chamber and the opening portion is located inside the sterile chamber.

3. The apparatus for manufacturing a packaging product according to claim 1, wherein the transfer device further comprises:
- a movable support plate, the pushing assembly being provided on the support plate; and
- a first driver used to drive the support plate to move the support plate and the pushing assembly in a second direction, wherein a first direction is parallel to the support plate and parallel to a conveying direction of the conveying assembly, and the second direction is parallel to the support plate and perpendicular to the first direction.

4. The apparatus for manufacturing a packaging product according to claim 3, wherein the transfer device further comprises a first guide assembly, and the first guide assembly comprises:
- a guide rail provided on the support plate and parallel to the first direction; and
- a movable sliding block slidably connected to the guide rail, wherein the pushing assembly is connected to the sliding block and configured to move with the sliding block in the first direction.

5. The apparatus for manufacturing a packaging product according to claim 3, wherein the transfer device further comprises:
- a top plate located above the support plate; and
- a second guide assembly comprising a guide groove provided on the top plate and a guide member provided on the pushing assembly, wherein the guide member is configured to move in the guide groove to move the pushing assembly in an extension direction of the guide groove.

6. The apparatus for manufacturing a packaging product according to claim 5, wherein an extension direction of at least a part of the guide groove has components in the first direction and the second direction, such that the pushing assembly simultaneously moves in the first direction and the second direction.

7. The apparatus for manufacturing a packaging product according to claim 3, wherein the pushing assembly comprises:
- a connecting member connected to the support plate and comprising a first end portion and a second end portion opposite to each other in an extension direction of the connecting member, the second end portion extending in a third direction perpendicular to the support plate; and
- a pushing member provided on the second end portion, wherein the opening portion comprises a tube body and a flange surrounding the tube body, and the pushing member is configured to abut against the flange to push the packaging assembly.

8. The apparatus for manufacturing a packaging product according to claim 7, wherein the pushing assembly further comprises: a clamping jaw provided on the second end portion and spaced apart from the pushing member in the third direction, the clamping jaw being configured to at least partially surround the tube body.

9. The apparatus for manufacturing a packaging product according to claim 8, wherein the clamping jaw comprises a first finger portion and a second finger portion, the first finger portion and the second finger portion are opposite to each other in a diameter direction of the tube body, and the first finger portion and the second finger portion have unequal lengths.

10. The apparatus for manufacturing a packaging product according to claim 8, wherein there are a plurality of pushing assemblies, and two clamping jaws of two adjacent pushing assemblies among the plurality of pushing assemblies have unequal vertical distances to the support plate.

11. The apparatus for manufacturing a packaging product according to claim 1, wherein there are a plurality of packaging assemblies and a plurality of pushing assemblies, and the plurality of pushing assemblies are configured to push the plurality of packaging assemblies to a plurality of target positions batch by batch.

12. The apparatus for manufacturing a packaging product according to claim 11, wherein two adjacent pushing assemblies among the plurality of pushing assemblies have a spacing in the first direction, and the spacing is set to be variable.

13. The apparatus for manufacturing a packaging product according to claim 12, wherein the spacing gradually increases before the two adjacent pushing assemblies push two adjacent packaging assemblies to reach respective target positions thereof.

14. The apparatus for manufacturing a packaging product according to claim 1, wherein the transfer device further comprises: a guide plate provided with a guide channel parallel to the conveying direction, the packaging assembly being guided into the guide channel, and the pushing assembly being configured to push the packaging assembly in the guide channel to the target position.

15. The apparatus for manufacturing a packaging product according to claim 14, wherein the transfer device further comprises:
- a bottom plate, the guide plate being connected to the bottom plate; and
- a second driver used to drive the bottom plate, so as to move the bottom plate and the guide plate in a direction parallel to the guide plate.

16. The apparatus for manufacturing a packaging product according to claim 14, wherein the transfer device further comprises: a blocking member configured to block the packaging assembly in the guide channel to position the packaging assembly in the guide channel.

17. The apparatus for manufacturing a packaging product according to claim 16, wherein the transfer device further comprises: a top plate, wherein the blocking member is connected to the top plate and is located below the guide plate, and the guide plate is configured to be movable relative to the blocking member, so as to drive the packaging assembly in the guide channel to be released from positioning.

18. The apparatus for manufacturing a packaging product according to claim 1, comprising two transfer devices respectively provided on two opposite sides of the conveying assembly perpendicular to the conveying direction.

19. The apparatus for manufacturing a packaging product according to claim 1, further comprising: at least one buffer device located outside the sterile chamber and between the supply device and the transfer device to buffer a supply time interval of the packaging assembly.

20. The apparatus for manufacturing a packaging product according to claim 19, wherein the buffer device comprises: a rotating component having a holding portion for holding the packaging assembly and configured to rotate the holding portion and the packaging assembly from a first position away from the transfer device to a second position close to the transfer device.

21. The apparatus for manufacturing a packaging product according to claim 20, wherein the rotating component comprises a turntable, an outer edge of the turntable is provided with a notch, and the packaging assembly is configured to be hung in the notch such that the packaging assembly is in a suspended state.

22. The apparatus for manufacturing a packaging product according to claim 19, comprising two buffer devices respectively provided on two opposite sides of the conveying assembly perpendicular to the conveying direction.

23. The apparatus for manufacturing a packaging product according to claim 1, wherein the pretreatment device further comprises a preheating device provided before the sterilization device in the conveying direction and a drying device provided after the sterilization device in the conveying direction.

24. The apparatus for manufacturing a packaging product according to claim 23, wherein the preheating device comprises at least one preheating nozzle, the sterilization device comprises at least one sterilization nozzle, the drying device comprises at least one drying nozzle, and the opening portion is configured to, after entering the sterile chamber, be sequentially aligned with the preheating nozzle, the sterilization nozzle, and the drying nozzle.

25. The apparatus for manufacturing a packaging product according to claim 1, further comprising: a capping device located inside the sterile chamber, wherein the conveying assembly is further configured to convey the packaging assembly into the capping device after the packaging body is filled with the contents, and the capping device is configured to seal the packaging assembly with a cap.

26. The apparatus for manufacturing a packaging product according to claim 1, further comprising: at least one discharging device located outside the sterile chamber, wherein the conveying assembly is further configured to convey the packaging assembly into the discharging device after the packaging body is filled with the contents, and the discharging device is configured to remove the packaging assembly from the conveying assembly, the packaging assembly being with or without a cap.

27. The apparatus for manufacturing a packaging product according to claim 26, wherein the discharging device comprises at least one first discharging assembly close to the sterile chamber and at least one second discharging assembly away from the sterile chamber, the first discharging assembly is configured to remove non-compliant packaging assemblies from the conveying assembly, and the second discharging assembly is configured to remove compliant packaging assemblies from the conveying assembly.

28. The apparatus for manufacturing a packaging product according to claim 27, wherein the first discharging assembly comprises:
- a first discharging plate provided with a first discharging channel; and
- a first discharging pushing block configured to push the non-compliant packaging assemblies from the conveying assembly into the first discharging channel and to drop the non-compliant packaging assemblies when the non-compliant packaging assemblies are pushed to a discharging position on the first discharging channel.

29. The apparatus for manufacturing a packaging product according to claim 28, wherein the first discharging assembly further comprises: a first discharging drive mechanism used to drive the first discharging pushing block, wherein there are a plurality of first discharging assemblies, and a plurality of first discharging pushing blocks of the plurality of first discharging assemblies are independently driven by respective first discharging drive mechanisms thereof.

30. The apparatus for manufacturing a packaging product according to claim 27, wherein the second discharging assembly comprises:
- a second discharging plate provided with a second discharging channel; and
- a second discharging pushing block configured to push the compliant packaging assemblies from the conveying assembly into the second discharging channel and to drop the compliant packaging assemblies when the compliant packaging assemblies are pushed to a discharging position on the second discharging channel.

31. The apparatus for manufacturing a packaging product according to claim 30, wherein the second discharging assembly further comprises: a second discharging drive mechanism used to drive the second discharging pushing block, wherein there are a plurality of second discharging assemblies, and a plurality of second discharging pushing blocks of the plurality of second discharging assemblies are driven by a same second discharging drive mechanism.

32. The apparatus for manufacturing a packaging product according to claim 30, wherein the plurality of second discharging assemblies are configured to remove a plurality of compliant packaging assemblies, and the plurality of compliant packaging assemblies have unequal movement distances after entering respective second discharging channels thereof.

33. The apparatus for manufacturing a packaging product according to claim 1, wherein the conveying assembly comprises a movable conveyor belt and a holding member provided on the conveyor belt, and the holding member is configured to hold the packaging assembly therein at the target position and to bring the packaging assembly from the target position into the sterile chamber.

34. The apparatus for manufacturing a packaging product according to claim 33, wherein the holding member comprises a first jaw portion and a second jaw portion opposite to each other in an extension direction of the holding member, and the first jaw portion and the second jaw portion are respectively located on two opposite sides of the conveyor belt perpendicular to the conveying direction; and
the conveyor belt comprises a first jaw portion group and a second jaw portion group, the first jaw portion group comprising a plurality of first jaw portions and the second jaw portion group comprising a plurality of second jaw portions.

35. The apparatus for manufacturing a packaging product according to claim 34, further comprising: a modular manufacturing assembly, wherein the modular manufacturing assembly is detachably provided on a side where at least one of the first jaw portion group and the second jaw portion group is located, and the modular manufacturing assembly comprises at least one of the transfer device, a buffer device and a discharging device located outside the sterile chamber.

36. The apparatus for manufacturing a packaging product according to claim 1, wherein the supply device comprises a manufacturing machine for manufacturing the packaging body and an attaching machine for attaching the opening portion to the packaging body.

37. The apparatus for manufacturing a packaging product according to claim 1, wherein the supply device comprises a material feeding machine for providing a prefabricated packaging assembly, the apparatus for manufacturing further comprises a transport device located between the material feeding machine and the transfer device, and the transport device comprises:
- a plate body provided with a transport channel, the packaging assembly being located in the transport channel; and
- a propelling assembly configured to push the packaging assembly to enter the transfer device in an extension direction of the transport channel.

38. A method for manufacturing a packaging product, comprising:
- providing a packaging assembly outside a sterile chamber, the packaging assembly comprising a packaging body having an opening portion;
- transferring the packaging assembly to a target position outside the sterile chamber;
- conveying the packaging assembly from the target position into the sterile chamber;
- pretreating the packaging assembly inside the sterile chamber, the pretreating comprising sterilization; and
- filling contents into the packaging body inside the sterile chamber.

39. The method for manufacturing a packaging product according to claim 38, wherein there are a plurality of packaging assemblies, and the method for manufacturing comprises:
- moving the plurality of packaging assemblies to a plurality of target positions outside the sterile chamber; and
- conveying the plurality of packaging assemblies from the plurality of target positions into the sterile chamber.

40. The method for manufacturing a packaging product according to claim 39, wherein the plurality of packaging assemblies are sequentially arranged in a conveying direction; and moving the plurality of packaging assemblies to a plurality of target positions outside the sterile chamber comprises: moving the plurality of packaging assemblies in a first direction parallel to the conveying direction and a second direction perpendicular to the conveying direction, so as to cause the plurality of packaging assemblies to reach the plurality of target positions, respectively; and during the movement, a spacing between two adjacent packaging assemblies among the plurality of packaging assemblies in the first direction gradually increases.

41. The method for manufacturing a packaging product according to claim 39, further comprising: moving the plurality of packaging assemblies to the plurality of target positions batch by batch until all the packaging assemblies are conveyed into the sterile chamber.

42. The method for manufacturing a packaging product according to claim 39, wherein before moving the plurality of packaging assemblies to a plurality of target positions outside the sterile chamber, the method for manufacturing further comprises:
- guiding the plurality of packaging assemblies into a guide channel;
- blocking the plurality of packaging assemblies in the guide channel to position the plurality of packaging assemblies in the guide channel; and
- moving the guide channel to drive the plurality of packaging assemblies to be released from positioning.

43. The method for manufacturing a packaging product according to claim 39, wherein before moving the plurality of packaging assemblies to a plurality of target positions outside the sterile chamber, the method for manufacturing further comprises: buffering a supply time interval of the packaging assemblies.

44. The method for manufacturing a packaging product according to claim 38, wherein the pretreating further comprises preheating and drying; and before filling contents into the packaging body inside the sterile chamber, the method for manufacturing further comprises: sequentially performing preheating, sterilization and drying of the packaging body.

45. The method for manufacturing a packaging product according to claim 38, wherein after filling contents into the packaging body inside the sterile chamber, the method for manufacturing further comprises: sealing the packaging assembly with a cap inside the sterile chamber.

46. The method for manufacturing a packaging product according to claim 38, wherein after filling contents into the packaging body inside the sterile chamber, the method for manufacturing further comprises:
- conveying the packaging assembly to the outside of the sterile chamber;
- removing, outside the sterile chamber, non-compliant packaging assemblies;
- removing, outside the sterile chamber, compliant packaging assemblies.
